(19) Europäisches Patentamt
European Patent Office
Office européen des brevets

(11) **EP 2 690 597 A2**

(12) **EUROPEAN PATENT APPLICATION**

(43) Date of publication:
**29.01.2014 Bulletin 2014/05**

(51) Int Cl.:
***G06T 7/00*** (2006.01)

(21) Application number: **13177769.0**

(22) Date of filing: **24.07.2013**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **27.07.2012 JP 2012167630**
**20.11.2012 JP 2012254331**
**30.11.2012 JP 2012262104**
**28.05.2013 JP 2013112133**

(71) Applicant: **Ricoh Company, Ltd.**
**Tokyo 143-8555 (JP)**

(72) Inventors:
• **Sekiguchi, Hiroyoshi**
**Tokyo 143-8555 (JP)**
• **Morioka, Makoto**
**Tokyo 143-8555 (JP)**
• **Kida, Shintaro**
**Tokyo 143-8555 (JP)**
• **Takahashi, Yuji**
**Tokyo 143-8555 (JP)**

(74) Representative: **Schwabe - Sandmair - Marx**
**Patentanwälte**
**Stuntzstraße 16**
**81677 München (DE)**

(54) **Adhering matter detecting device, moving body device control system**

(57)     An adhering matter detecting device includes a radiating unit for radiating light onto a predetermined area of an object to which adhering matter adheres; an imaging unit configured for receiving, by a plurality of pixels, reflected light from the adhering matter of the light radiated from the radiating unit, converting the received reflected light into image data, and outputting the image data; and a calculating unit for processing the image data obtained from the imaging unit, and calculating adhering amount information of the adhering matter. The calculating unit divides an image area used for detecting the adhering matter into a plurality of reference areas, calculates adhering-matter-by-area information indicating an amount of the adhering matter in each of the plurality of reference areas, compares the adhering-matter-by-area information with a predetermined threshold, and calculates the adhering amount information by adding together the adhering-matter-by-area information using a result of the comparison.

FIG.1

**Description**

BACKGROUND OF THE INVENTION

1. Field of the Invention

The present invention relates to an adhering matter detecting device and a moving body device control system for detecting adhering matter adhering to an object.

2. Description of the Related Art

Conventionally, there is known an adhering matter detecting device installed in a vehicle such as an automobile for detecting adhering matter such as raindrops adhering to the front windscreen with the use of an imaging means.

In one example, there is a device for dividing a raindrop detection area into a predetermined number of blocks, calculating the luminance of each block from image data, and determining that foreign matter has adhered in the raindrop detection area when the variation of luminance among the blocks is greater than or equal to a predetermined standard value (see, for example, Patent Document 1).

In another example, there is a device for dividing a raindrop detection area into a predetermined number of blocks, calculating the luminance change ratio of each block by applying a code from image data, and identifying the foreign matter in the raindrop detection area based on the difference in the intervals at which the code of the luminance change ratio changes (see, for example, Patent Document 2).

However, in the devices of the above examples, the noise that changes due to changes in the environment and variations in the detector is not sufficiently considered, and therefore the detection sensitivity is low and it has been difficult to distinguish small adhering matter (for example, one raindrop) from noise.

Patent Document 1: Japanese Laid-Open Patent Publication No. H10-148618

Patent Document 2: Japanese Laid-Open Patent Publication No. H10-261064

SUMMARY OF THE INVENTION

The present invention provides an adhering matter detecting device and a moving body device control system, in which one or more of the above-described disadvantages are eliminated.

A preferred embodiment of the present invention provides an adhering matter detecting device and a moving body device control system, by which the detection sensitivity is improved.

According to an aspect of the present invention, there is provided an adhering matter detecting device including a light radiating unit configured to radiate light onto a predetermined area of an object to which adhering matter adheres; an imaging unit configured to receive, by a plurality of pixels, reflected light from the adhering matter of the light radiated from the light radiating unit, convert the received reflected light into image data, and output the image data; and an adhering amount information calculating unit configured to process the image data obtained from the imaging unit, and calculate adhering amount information of the adhering matter, wherein the adhering amount information calculating unit divides an image area used for detecting the adhering matter into a plurality of reference areas, calculates adhering-matter-by-area information indicating an amount of the adhering matter in each of the plurality of reference areas, compares the adhering-matter-by-area information with a predetermined threshold, and calculates the adhering amount information by adding together the adhering-matter-by-area information using a result of the comparison.

BRIEF DESCRIPTION OF THE DRAWINGS

Other objects, features and advantages of the present invention will become more apparent from the following detailed description when read in conjunction with the accompanying drawings, in which:

FIG. 1 is a schematic diagram of the configuration of a moving body device control system according to an embodiment;

FIG. 2 is a schematic diagram of the configuration of a raindrop detecting device according to an embodiment;

FIG. 3 is a partial enlarged view of FIG. 2;

FIGS. 4A and 4B illustrate an optical filter according to an embodiment;

FIG. 5 illustrates an example of a pick-up image;

FIG. 6 illustrates a cut filter;

FIG. 7 illustrates a bandpath filter;

FIG. 8 schematically illustrates a raindrop detecting device according to a modification of the embodiment;

FIG. 9 illustrates a configuration of an image analyzing unit;

FIG. 10 illustrates an example where a raindrop amount information calculating unit is installed in an imaging unit;

FIG. 11 illustrates a connection example of the raindrop amount information calculating unit and the imaging unit;

FIGS. 12A and 12B illustrate an example of a signal luminance of a raindrop detected in a raindrop detection area;

FIG. 13 illustrates an example of the sum of pixel values in each reference area of raindrops detected in the raindrop detection area;

FIG. 14 illustrates an example of the raindrop detection area provided on the front windscreen;

FIG. 15 illustrates an image area corresponding to the raindrop detection area divided into a plurality of reference areas;

FIG. 16 is a flowchart for describing an operation by the raindrop amount information calculating unit;

FIGS. 17A through 17E illustrate temporal changes in the sums of pixel values of each of the reference areas of raindrops detected in the raindrop detection area (part 1);

FIGS. 18A through 18D illustrate the relationship between the total sum of pixel values and the time (part 1);

FIG. 19 is a block diagram of an example of a moving averaging process;

FIGS. 20A through 20C illustrate temporal changes in the sums of pixel values of each of the reference areas of raindrops detected in the raindrop detection area (part 2);

FIGS. 21A and 21B illustrate the relationship between the total sum of pixel values and the time (part 2);

FIG. 22 is a block diagram illustrating a specific process for responding to a rapid change in the raindrop information;

FIG. 23 illustrates an example of results of a differential calculation process performed at a differential calculation unit;

FIG. 24 illustrates an example of the relationship between the total sum of pixel values and the time when the process of FIG. 22 is executed;

FIG. 25 is a flowchart of the process of FIG. 22 (part 1);

FIGS. 26A and 26B are a flowchart of the process of FIG. 22 (part 2);

FIG. 27 is a graph simulating the output of a raindrop detection process performed on the amount of raindrops adhering to the front windscreen;

FIG. 28 is a block diagram of a weighted averaging process;

FIG. 29 is a graph of a case where the noise of a direct current component is removed by performing a weighted average difference process;

FIG. 30 is a block diagram of a weighted average differential process;

FIG. 31 is a graph of a case where a moving averaging process is applied to the output pixel value;

FIG. 32 is graph indicating simulation results for responding to a rapid change in the raindrop information (splash) (part 1);

FIG. 33 is graph indicating simulation results for responding to a rapid change in the raindrop information (splash) (part 2);

FIG. 34 is a flowchart for describing a specific process for responding to a rapid change in the raindrop information (part 1);

FIG. 35 is a flowchart for describing a specific process for responding to a rapid change in the raindrop information (part 2);

FIG. 36 is a block diagram illustrating a specific process for responding to a rapid change in the raindrop information;

FIG. 37 is a graph simulating a case where the amount of raindrops adhering to the front windscreen has rapidly decreased;

FIG. 38 is a flowchart for describing a clamp process (part 1);

FIG. 39 is a flowchart for describing a clamp process (part 2); and

FIG. 40 is a graph simulating a case where the amount of raindrops adhering to the front windscreen has rapidly decreased when a clamp process is introduced.

## DETAILED DESCRIPTION OF THE PREFERRED EMBODIMENTS

A description is given, with reference to the accompanying drawings, of embodiments of the present invention. In the drawings, the same elements are denoted by the same reference numerals, and overlapping descriptions may be omitted.

In the following embodiments, a description is given of an example of a moving body device control system including an adhering matter detecting device installed in a moving body such as a vehicle, for detecting adhering matter such as raindrops adhering to the front windscreen of the moving body, and controlling a moving body device; however, the present invention is not so limited. For example, an adhering matter detecting device may be used to detect adhering matter such as raindrops adhering to a glass window of a building. Note that a moving body device is a predetermined device installed in the moving body. For example, if the moving body is a vehicle, the moving body device may be the windscreen wiper or the headlights.

Moving body device control system

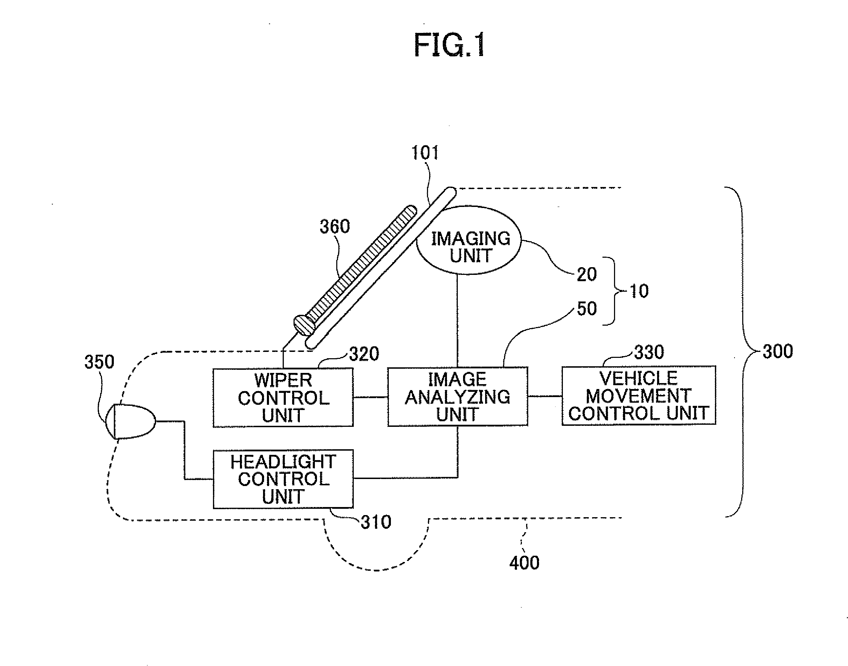

First, a description is given of a moving body device control system according to an embodiment. FIG. 1 is a schematic diagram of the configuration of the moving body device control system according to an embodiment. In a moving body device control system 300 illustrated in FIG. 1, a vehicle (automobile) is taken as an example of a moving body. Referring to FIG. 1, the moving body device control system 300 includes an adhering matter detecting device 10, a headlight control unit 310, a wiper control unit 320, a vehicle movement control unit 330, a headlight 350, and a wiper 360. In FIG. 1, a self-vehicle such as an automobile is denoted by 400.

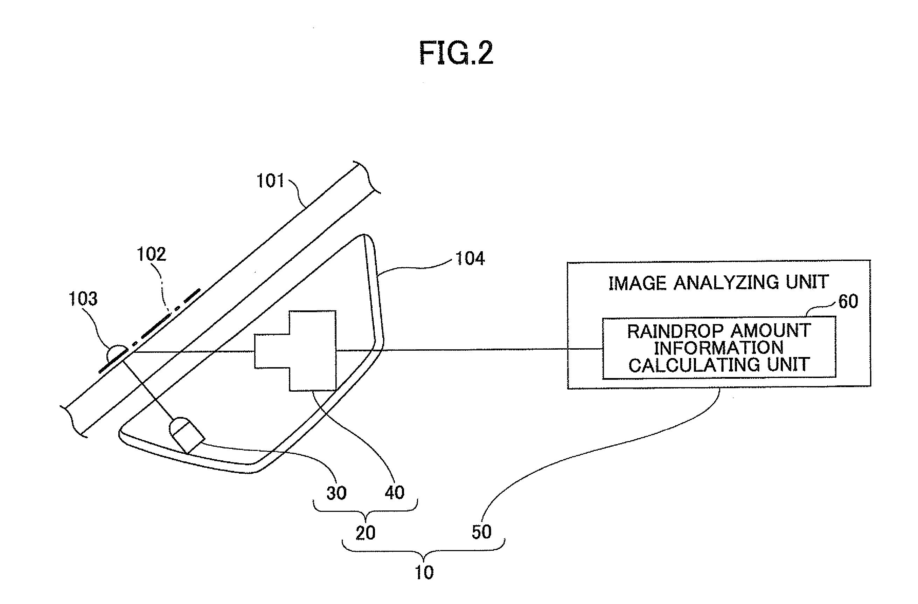

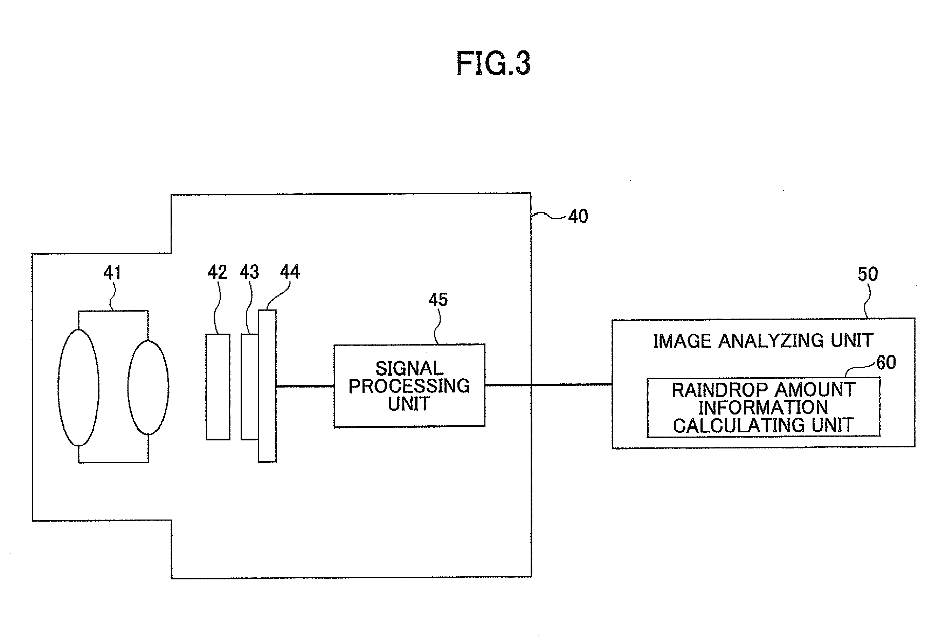

The moving body device control system 300 has a function of implementing predetermined control by using pick-up image data of a front area in a self-vehicle movement direction (imaging area) that is taken (picked up) by an imaging device 40 (see FIGS. 2 and 3) of the adhering matter detecting device 10 installed in the self-vehicle 400. Examples of the predetermined control are control of light distribution of headlights, drive control of the wiper, and control of other devices installed in the self-vehicle 400.

The pick-up image data taken with the imaging device 40 is input to an image analyzing unit 50. For example, the image analyzing unit 50 calculates the position, the direction, and the distance of another vehicle present in front of the self-vehicle 400, by analyzing pick-up image data sent from the imaging device 40.

Furthermore, the image analyzing unit 50 detects a leading vehicle moving in the same movement direction as the self-vehicle 400 by identifying the taillights of another vehicle, and detects an oncoming vehicle moving in the opposite direction of the self-vehicle 400 by identifying headlights of another vehicle. Furthermore, the image analyzing unit 50 detects adhering matter such as raindrops and foreign matter adhering to a front windscreen 101, and detects a detection object such as a white line (compartment line) on a road in the imaging area.

The analysis results of the image analyzing unit 50 are sent to the headlight control unit 310. For example, the headlight control unit 310 generates a control signal for controlling the headlight 350 that is a device installed in the self-vehicle 400, based on distance data calculated by the image analyzing unit 50.

Specifically, for example, the headlight control unit 310 secures the field of vision of the driver of the self-vehicle 400 while preventing intensive light of the headlight 350 of the self-vehicle 400 from being radiated into the eyes of the driver of a leading vehicle or an oncoming vehicle so that the driver of another vehicle is not dazzled. For this purpose, the headlight control unit 310 controls the switching of a high beam and a low beam of the headlight 350, and controls the partial blocking of the light from the headlight 350.

The analysis results of the image analyzing unit 50 are also sent to the wiper control unit 320. The wiper control unit 320 controls the wiper 360 to remove adhering matter such as raindrops and foreign matter adhering to the front windscreen 101 of the self-vehicle 400. The wiper control unit 320 receives the adhering matter detection result obtained from the image analyzing unit 50, and generates a control signal for controlling the wiper 360. When the control signal generated by the wiper control unit 320 is sent to the wiper 360, the wiper 360 is operated to secure the field of vision of the driver of the self-vehicle 400.

The analysis results of the image analyzing unit 50 are also sent to the vehicle movement control unit 330. For example, the vehicle movement control unit 330 reports a warning to the driver of the self-vehicle 400 when the self-vehicle 400 has deviated form the traffic lane area partitioned by white lines, based on a white line detection result obtained from the image analyzing unit 50. Furthermore, for example, the vehicle movement control unit 330 performs moving support control of controlling the steering wheel and the brakes of the self-vehicle 400.

Adhering matter detecting device

Next, a description is given of an adhering matter detecting device according to an embodiment. The adhering matter detecting device according to an embodiment can detect adhering matter such as raindrops and foreign matter. However, in the following description, raindrops are taken as a typical example of adhering matter, and a raindrop detecting device is taken as a typical example of the adhering matter detecting device. Therefore, the adhering matter detecting device 10 may be referred to as a raindrop detecting device 10.

FIG. 2 is a schematic diagram of the configuration of the raindrop detecting device according to an embodiment. FIG. 3 is a partial enlarged view of FIG. 2. Referring to FIGS. 2 and 3, the raindrop detecting device 10 includes an imaging unit 20 and the image analyzing unit 50. The front windscreen 101 is a typical example of an object to which adhering matter adheres according to an embodiment of the present invention.

For example, the imaging unit 20 is installed near the front windscreen 101 of the vehicle (for example, near a rearview mirror (not shown)). For example, the imaging unit 20 may be installed near the front windscreen 101 in a state where the imaging unit 20 is accommodated in a cover 104 that is transparent on at least the side of the front windscreen 101.

Furthermore, the imaging unit 20 may be disposed such that the cover 104 having an opening on the side of the front windscreen 101 is in close contact with the front windscreen 101, so that the imaging unit 20 is covered by the front windscreen 101 and the cover 104. In this case, even when the inner side of the front windscreen 101 becomes fogged, the part of the front windscreen 101 covered by the cover 104 is prevented from becoming fogged. As a result, the image analyzing unit 50 is prevented from making erroneous analysis due to the fog of the front windscreen 101, and various control operations can be appropriately performed based on the analysis results of the image analyzing unit 50.

However, for example, in a case of detecting the fog of the front windscreen 101 with the imaging unit 20, and controlling the air conditioner in the self-vehicle, an air path is to be formed in the cover 104 so that the part of the front windscreen 101 facing the imaging unit 20 is under the same circumstances as the other parts.

The imaging unit 20 includes a light source 30 and the imaging device 40. The light source 30 is provided for detecting raindrops adhering to the front windscreen 101, and has a function of radiating light from one side (the inner side) of the front windscreen 101 into the front windscreen 101.

The light source 30 is disposed at a position where light can be radiated to at least a raindrop detection area 102 for detecting a raindrop 103 adhering to the front windscreen 101. For example, when the raindrop detection area 102 is at a bottom edge side of the front windscreen 101, the light source 30 is disposed at a position where light can be radiated to at least the bottom edge side of the front windscreen 101. Furthermore, when the raindrop detection area 102 is at the top edge side and the bottom edge side of the front windscreen 101, the light source 30 is disposed at a position where light can be radiated to at least the top edge side and the bottom edge side of the front windscreen 101. Furthermore, when the raindrop detection area 102 is across the entire front windscreen 101, the light source 30 is disposed at a position where light can be radiated to at least the entire surface of the front windscreen 101. In order to reliably radiate light to the raindrop detection area 102, a plurality of light sources 30 may be disposed.

As the light source 30, for example, a light emitting diode (LED) and a semiconductor laser (LD) may be used. Furthermore, the light source 30 emits light at a predetermined wavelength band. As the light emitting wavelength of the light source 30, for example, visible light or infrared light may be used.

However, it is necessary to prevent the driver of an oncoming vehicle or pedestrians from being dazzled by the light of the light source 30. Therefore, as the light emitting wavelength of the light source 30, it is preferable to select a wavelength that is longer than visible light and that has a range to which the light receiving sensitivity of an image sensor 43 described below reaches (for example, a wavelength of an infrared light area of greater than or equal to 800 nm and less than or equal to 1000 nm).

According to need, it is preferable to provide a collimated lens to the latter stage of the light source 30, so that the light beams radiated from the light source 30 become substantially parallel light beams. The light source 30 is a typical example of a light radiating unit according to an embodiment of the present invention. However, the light radiating unit may include an element such as a lens (e.g., a collimated lens) with which the format of the light radiated from the light source 30 can be adjusted. Furthermore, the raindrop detection area 102 is a typical example of a predetermined area according to an embodiment of the present invention.

The imaging device 40 is disposed on the same side as the light source 30 with respect to the front windscreen 101, and has a function of imaging the reflected light of light radiated from the light source 30 to the raindrop 103 and incident light from outside the vehicle. In the present embodiment, the imaging device 40 is disposed such that a light axis of an imaging lens 41 is directed in a horizontal direction; however, the present invention is not so limited. Note that the light source 30 is disposed at a position where the reflected light of light radiated from the light source 30 to the raindrop 103 enters the imaging device 40.

The imaging device 40 includes an imaging lens 41, an optical filter 42, an image sensor 43, a sensor substrate 44, and a signal processing unit 45. For example, the imaging lens 41 is constituted by plural lenses, and the focal point is set further away from the position of the front windscreen 101. For example, the focal point position of the imaging lens 41 is set at infinity or between infinity and the front windscreen 101.

The optical filter 42 is disposed at a stage before the image sensor 43, and has a function of restricting the wavelength band of light entering the image sensor 43. The optical filter 42 may be formed by appropriately selecting a material through which light in the light emitting wavelength band of the light source 30 can be transmitted. For example, when the light emitting wavelength band of the light source 30 is a visible light band or an infrared light band, as the material of the optical filter 42, glass, sapphire, and crystal may be used. The optical filter 42 may be formed to transmit only a predetermined polarized light component (for example, a P polarized light component) in the incident light.

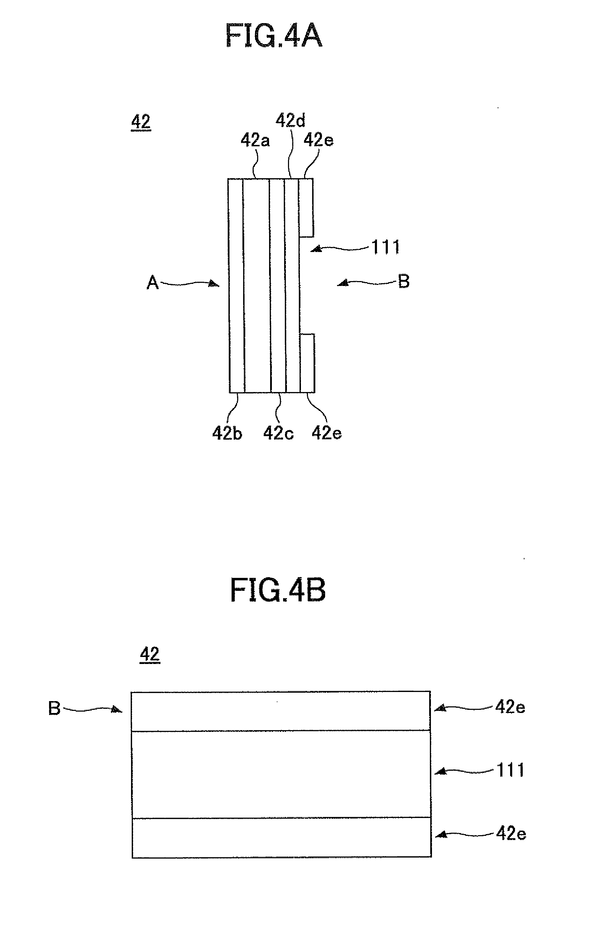

FIGS. 4A and 4B illustrate the optical filter 42 according to an embodiment. FIG. 4A is a side view and FIG. 4B is a front view (a view from the image sensor 43). As illustrated in FIGS. 4A and 4B, the optical filter 42 includes a substrate 42a. On the surface of the substrate 42a on the side of the imaging lens 41 (the surface of side A), a spectroscopic filter layer 42b for transmitting infrared light and visible light is formed. Furthermore, on the surface of the substrate 42a on the side of the image sensor 43 (the surface of side B), a polarizing filter layer 42c, a SOG (Spin on Glass) layer 42d, and an infrared light transmission filter 42e are sequentially formed. In FIGS. 4A and 4B, 111 denotes a vehicle detection image area.

In the present embodiment, the polarizing filter layer 42c is formed by a wire grid polarizer. A wire grid is formed by arranging conductive wire made of metal such as aluminum in a lattice by a specific pitch. When the specific pitch of the wire grid is significantly smaller (for example, less than or equal to one half) than the incident light (for example, visible light having a wavelength of 400 nm through 800 nm), almost all of the light of the electric field vector components oscillating in parallel with the conductive wire, is reflected. Furthermore, almost all of the light of the electric field vector components perpendicular to the conductive wire, is transmitted. Thus, the polarizing filter layer 42c can be used as a polarizer for creating a single polarized light.

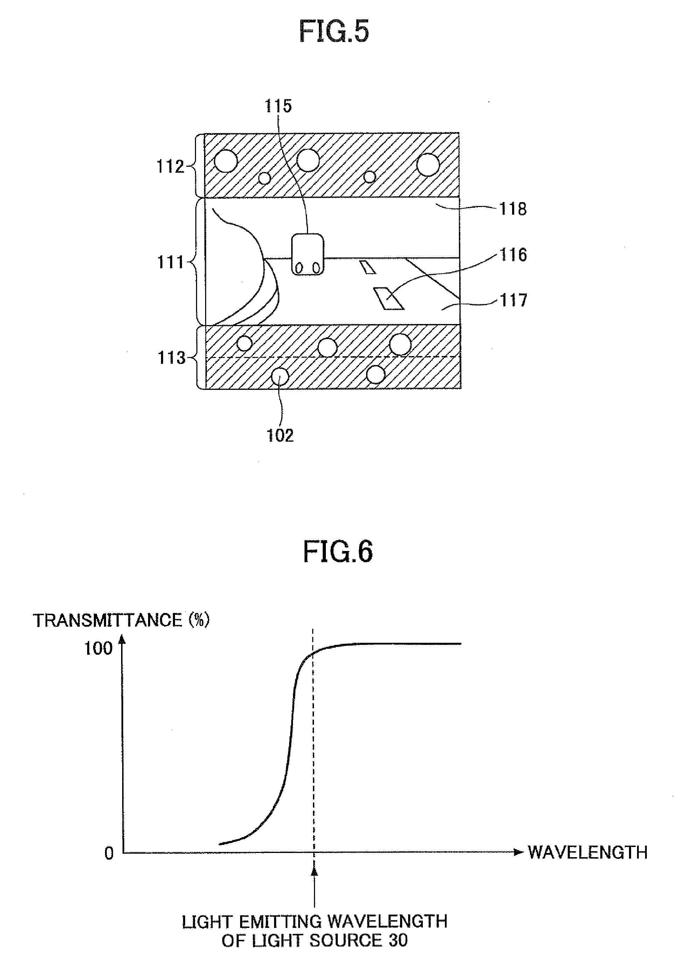

FIG. 5 illustrates an example of a pick-up image. As illustrated in FIG. 5, the image including the headlights of an oncoming vehicle (not shown), the taillights of a leading vehicle 115, and a white line 116 are often located in the center of the pick-up image. Furthermore, an image of a nearest road 117 in front of the self-vehicle is typically located at the bottom part of the pick-up image, and an image of a sky 118 is typically located at the top part of the pick-up image. That is to say, information needed for identifying the headlights of an oncoming vehicle (not shown), the taillights of the leading vehicle 115, and the white line 116 is concentrated at the center part of the pick-up image, and the information in the top part and the bottom part of the pick-up image is not very important for the identification.

Thus, when the detection of the oncoming vehicle, the leading vehicle 115, or the white line 116, and the detection of the raindrop 103 are both performed from a single pick-up image data item, as illustrated in FIG. 5, the center part of the pick-up image is preferably set as the vehicle detection image area 111. Furthermore, the top part of the pick-up image and the bottom part of the pick-up image are preferably set as raindrop detection image areas 112 and 113, respectively.

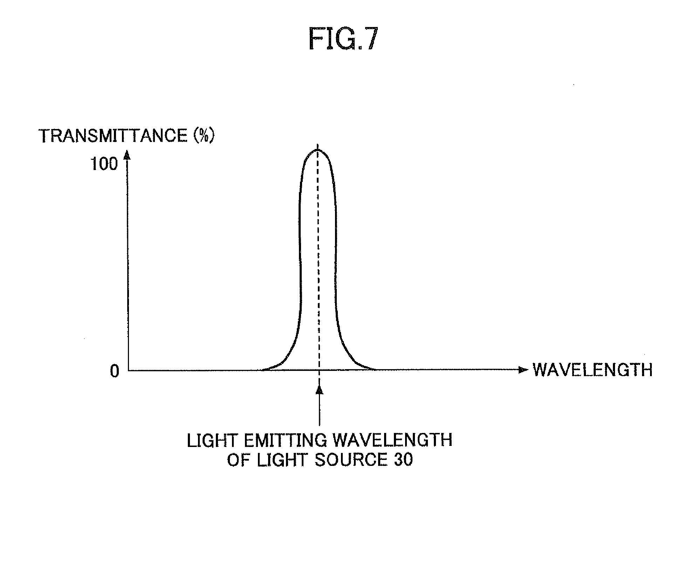

Therefore, as illustrated in FIG. 4 described above, the infrared light transmission filter 42e is provided, which is divided into an pick-up image top part corresponding to the raindrop detection image area 112 of FIG. 5 and an pick-up image bottom part corresponding to the raindrop detection image area 113 of FIG. 5. As the infrared light transmission filter 42e, for example, a cut filter as illustrated in FIG. 6 may be used, which transmits substantially the entire light emitting wavelength of the light source 30, and which blocks the short wavelength side with respect to the light emitting wavelength of the light source 30. Furthermore, a bandpath filter as illustrated in FIG. 7 may be used, which transmits only the light near the light emitting wavelength of the light source 30. In the present embodiment, the pick-up image top part corresponds to one fourth of the height at the top of the pick-up image, and the pick-up image bottom part corresponds to one fourth of the height at the bottom of the pick-up image.

Referring back to FIGS. 2 and 3, the image sensor 43 is constituted by plural pixels that are two-dimensionally arranged for receiving the light transmitted through the optical filter 42, and has a function of performing photoelectric conversion on the incident light for each pixel. The image sensor 43 is mounted on the sensor substrate 44. For example, the image sensor 43 is constituted by several hundred-thousands of pixels that are arranged two-dimensionally. As the image sensor 43, for example, a CCD (Charge Coupled Device) and a CMOS (Complementary Metal Oxide Semiconductor) may be used. On the incident side of the image sensor 43, for example, a micro-lens corresponding to each pixel may be provided, to increase the light collecting efficiency to the image sensor 43.

At a stage after the image sensor 43, the signal processing unit 45 is provided. The signal processing unit 45 converts the analog electric signal that has been subjected to photoelectric conversion at the image sensor 43 (electric signals corresponding the light amount entering each pixel of the image sensor 43), into a digital electric signal indicating the brightness (luminance) of each pixel in the picked-up image. Furthermore, the signal processing unit 45 has a function of outputting the digital electric signals to the image analyzing unit 50 provided in a latter stage, together with horizontal/perpendicular synchronization signals of the image as image data. The image sensor 43 and the signal processing unit 45 are typical examples of an imaging unit according to an embodiment of the present invention.

The image analyzing unit 50 includes a raindrop amount information calculating unit 60. The raindrop amount information calculating unit 60 has a function of processing image data obtained from the signal processing unit 45, and calculating adhering amount information of the raindrop 103 adhering to the front windscreen 101.

For example, the process performed by the raindrop amount information calculating unit 60 is executed as a program by a computer. The raindrop amount information calculating unit 60 may be constituted by, for example, CPU, RAM, ROM, FROM (not shown). The CPU realizes a function as the raindrop amount information calculating unit 60, and may have a function of controlling a peripheral IC for driving the light source 30 and the image sensor 43. The RAM has a function of holding imaging information and calculation results. The ROM has a function of storing control programs. The FROM is a non-volatile memory for holding adjustment values, etc. For example, the CPU, RAM, ROM, FROM, and the peripheral IC can exchange signals with each other via a bus. The raindrop amount information calculating unit 60 is a typical example of an adhering amount information calculating unit according to an embodiment of the present invention.

A detailed description is given of the adhering matter detecting device 10. The adhering matter detecting device 10 is constituted such that when there are no raindrops 103 adhering to the outer side of the front windscreen 101, and the light radiated from the light source 30 is reflected at the interface between the outer side of the front windscreen 101 and the outside air, the specular reflected light is prevented from entering the imaging device 40. Meanwhile, as illustrated in FIG. 2, when there is a raindrop 103 adhering on the outer side of the front windscreen 101, the difference in the refractive index between the outer side of the front windscreen 101 and the raindrop 103 is less than the difference in the refractive index between the outer side of the front windscreen 101 and the outside air.

Therefore, light radiated from the light source 30 is transmitted through the interface between the outer side of the front windscreen 101 and the raindrop 103, and enters the raindrop 103. Then, the light that has entered the raindrop 103 is reflected at the interface between the raindrop 103 and the air, and the diffused reflected light enters the imaging device 40. Accordingly, due to the presence of the raindrop 103, the amount of light entering the imaging device 40 increases. Due to this difference caused by the presence/absence of the raindrop 103, the raindrop amount information calculating unit 60 can detect the presence/absence of the raindrop 103 adhering to the front windscreen 101 based on pick-up image data sent from the imaging device 40.

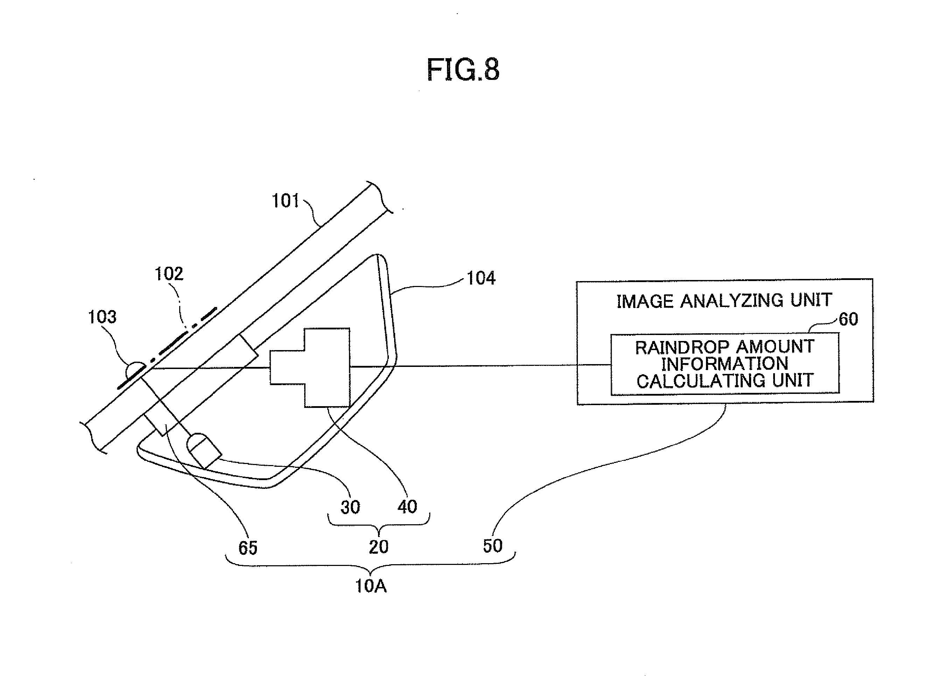

Here, a description is given of a raindrop detecting device 10A having a different configuration from the above raindrop detecting device. FIG. 8 schematically illustrates a raindrop detecting device according to a modification of the present embodiment. As illustrated in FIG. 8, the raindrop detecting device 10A is different from the raindrop detecting device 10 (see FIG. 1, etc.) in that a light guiding member 65 is added to the inner side of the front windscreen 101.

In the raindrop detecting device 10A, when there are no raindrops 103 adhering to the outer side of the front windscreen 101 (not shown), the light radiated from the light source 30 is guided by the light guiding member 65 such as a prism, and is totally reflected at the interface between the outer side of the front windscreen 101 and the outside air, and the reflected light enters the imaging device 40. Meanwhile, as illustrated in FIG. 8, when there is a raindrop 103 adhering to the outer side of the front windscreen 101, the difference in the refractive index between the outer side of the front windscreen 101 and the raindrop 103 is less than the difference in the refractive index between the outer side of the front windscreen 101 and the outside air.

Thus, the light radiated from the light source 30 is not totally reflected at the outer side of the front windscreen 101; instead, the light is transmitted through the interface between the outer side of the front windscreen 101 and the raindrop 103. Therefore, the amount of light, which enters the imaging device 40 due to the presence of the raindrop 103, is decreased. Due to this difference caused by the presence/absence of the raindrop 103, the raindrop amount information calculating unit 60 can detect the presence/absence of the raindrop 103 adhering to the front windscreen 101 based on pick-up image data sent from the imaging device 40.

In the present embodiment, the position of the focal point of the imaging lens 41 is set at infinity or between infinity and the front windscreen 101. Accordingly, the image analyzing unit 50 can acquire appropriate information from the pick-up image data of the imaging device 40, not only in a case where the raindrop amount information calculating unit 60 detects the raindrop 103, but also in a case where another element in the image analyzing unit 50 detects a leading vehicle, detects an oncoming vehicle, or detects a white line.

However, when the imaging lens 41 is in focus at infinity, and when the taillights of a leading vehicle running at a far distance are to be identified, there may be cases where the image sensor 43 has approximately one pixel for receiving the light of the taillights. In this case, the image sensor 43 cannot recognize the taillights, and a leading vehicle may not be detected.

In order to prevent such a failure, the focal point of the imaging lens 41 is preferably set before infinity. Accordingly, the taillights of a leading vehicle running at a far distance become blurred, and therefore the number of pixels for receiving the light of the taillights can be increased. As a result, the precision of recognizing the taillights is increased, and the precision in detecting a leading vehicle can be increased.

The light source 30 may be disposed to only radiate light in the area of the infrared light transmission filter 42e. Accordingly, the noise components from the vehicle detection area can be prevented. Furthermore, a plurality of light sources 30 may be provided. When a plurality of light sources 30 are provided, the polarizer pattern in each area of the polarizing filter layer 42c is preferably set so that only predetermined polarization components are transmitted. Predetermined polarization components are polarization components which are parallel to a surface formed by two light axes, i.e., a light axis of light radiated toward the front windscreen 101 from a light source having the largest amount of light entering the polarizer pattern among the plural light sources 30, and a light axis of the imaging lens 41.

As the light emitting method of the light source 30, continuous light emission (also referred to as CW light emission) or pulse light emission at predetermined timings may be performed. By synchronizing the timing of light emission and the timing of image pick-up, the impact of ambient light can be reduced. Furthermore, when a plurality of light sources 30 are provided, the plurality of light sources 30 may emit light at the same time or may emit light sequentially. When light is emitted sequentially, by synchronizing the timing of light emission and the timing of image pick-up, the impact of ambient light can be reduced.

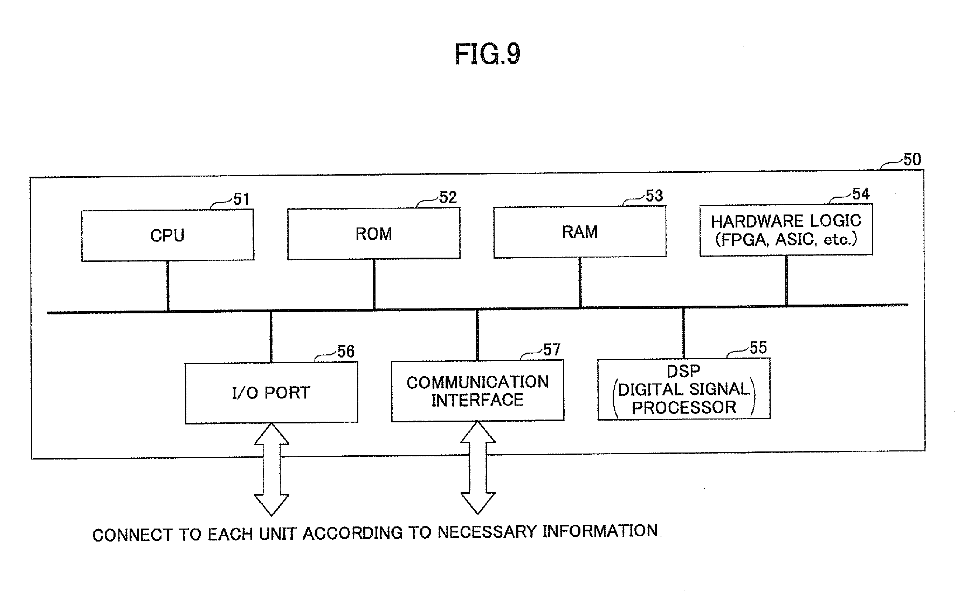

FIG. 9 illustrates a configuration of the image analyzing unit. Referring to FIG. 9, the image analyzing unit 50 includes a CPU 51, a ROM 52, a RAM 53, a hardware logic 54, a digital signal processor (DSP) 55, an I/O port 56, and a communication interface 57.

A process performed by the raindrop amount information calculating unit 60 is installed in the image analyzing unit 50 as a program of the CPU 51, the hardware logic 54, or as a combination of these formats. The I/O port 56 and the communication interface 57 are connected to the respective units shown in FIG. 1 according to the necessary information.

The raindrop amount information calculating unit 60 receives pick-up image data sent from the imaging device 40 of the imaging unit 20, detects the raindrop 103 adhering to the front windscreen 101, and sends the detection result to the wiper control unit 320. The wiper control unit 320 operates the wiper 360 based on the result.

The units shown in FIG. 1 may be installed in the vehicle as separate hardware items, or the units may be installed on a single substrate. Furthermore, the image analyzing unit 50 has plural functions such as raindrop amount detection, headlight control, and front image recognition. However, the respective functions may be decentralized, and the function of raindrop amount detection (raindrop amount information calculating unit 60) may be installed in the imaging unit 20 or the wiper control unit 320. Depending on the installation space and cost, the installation format may be appropriately changed.

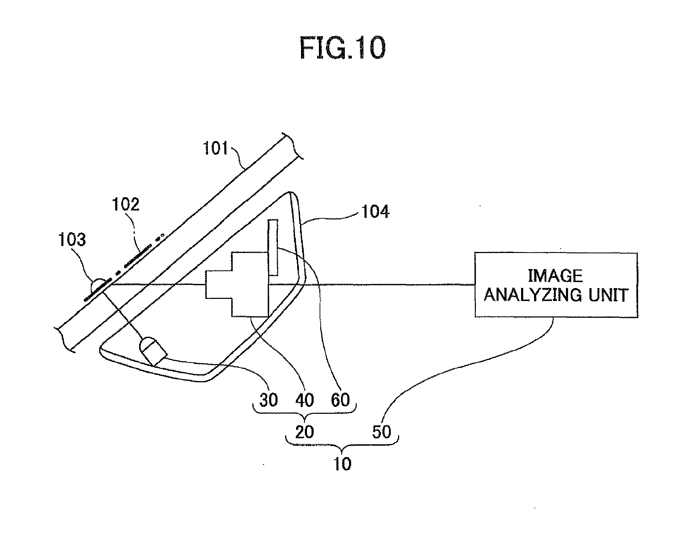

FIG. 10 illustrates an example where the raindrop amount information calculating unit is installed in the imaging unit. In the example of FIG. 10, the raindrop amount information calculating unit 60 is physically combined with the imaging device 40 (for example, a CPU, etc., constituting the imaging device 40 and the raindrop amount information calculating unit 60 are installed on a single substrate).

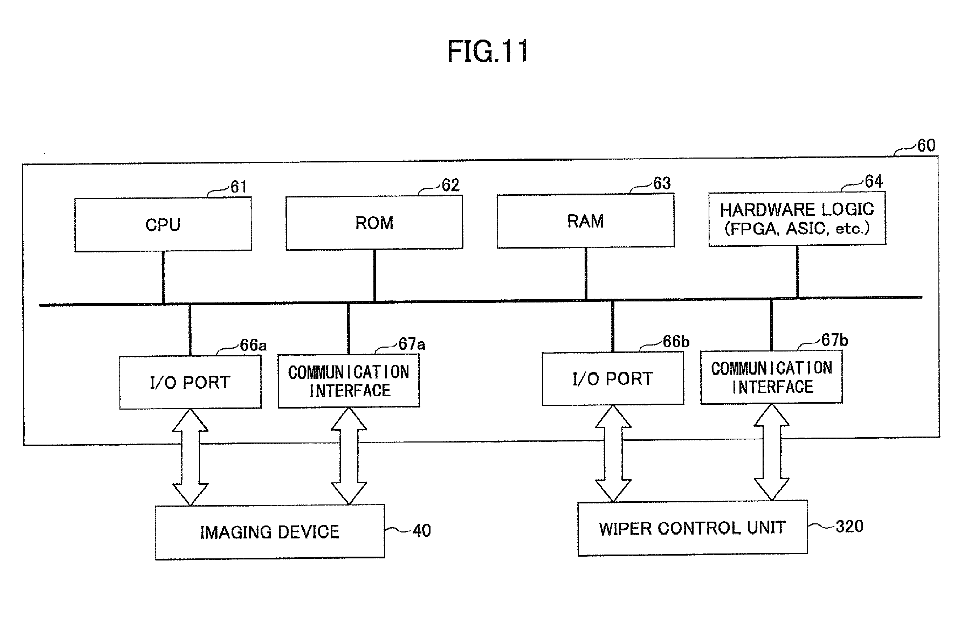

FIG. 11 illustrates a connection example of the raindrop amount information calculating unit and the imaging unit. Referring to FIG. 11, the raindrop amount information calculating unit 60 includes a CPU 61, a ROM 62, a RAM 63, a hardware logic 64, I/O ports 66a and 66b, and communication interfaces 67a and 67b. As described above, a process performed by the raindrop amount information calculating unit 60 may be realized as a program of the CPU 61, the hardware logic 64, or as a combination of these formats.

In the raindrop amount information calculating unit 60, image data is exchanged with the imaging device 40 at the I/O port 66a, and control commands are exchanged with the imaging device 40 at the communication interface 67a. The I/O port 66b and the communication interface 67a are connected to the wiper control unit 320 shown in FIG. 1 according to necessary information. The connection to the wiper control unit 320 may be made via the image analyzing unit 50.

Raindrop amount information calculating unit

Next, a description is given of a raindrop amount information calculating unit according to an embodiment. In the present embodiment, the raindrop amount information calculating unit 60 is constituted so as to detect the raindrop 103 by high detection sensitivity. Before giving a detailed description of a process performed by the raindrop amount information calculating unit 60, the basic idea is described.

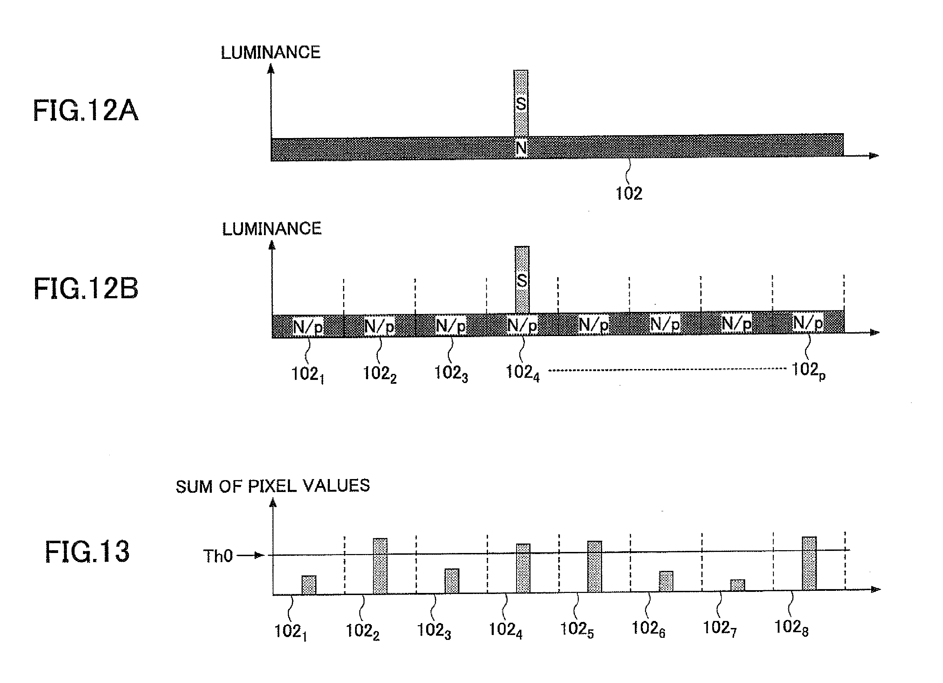

FIGS. 12A and 12B illustrate an example of a signal luminance of a raindrop detected in the raindrop detection area. As illustrated in FIG. 12A, a case where the raindrop detection area 102 is not divided into plural reference areas is considered. In the raindrop detection area 102, it is assumed that noise N is evenly present, and that the signal S detected from the raindrop 103 is present in only one reference area. In this case, the total sum of pixel values (total sum of luminance) is $S+N$, and the SN ratio is $S/N$.

In the present application, a value obtained by adding all pixel values in any one reference area is referred to as a "sum of pixel values", and the sum of pixel values in all of the reference areas is referred to as a "total sum of pixel values". That is to say, when there is a "p" number of reference areas (p being a positive integer of 2 or more), the total sum of pixel values=the sum of pixel values in a first reference area + the sum of pixel values in a second reference area + ... + the sum of pixel values in a pth reference area. However, in the above example, a signal S detected from the raindrop 103 is present in only one reference area, and therefore the sum of pixel values in that reference area=the total sum of pixel values. Furthermore, the pixel value indicates the luminance, and therefore the sum of pixel values is synonymous to the sum of luminance, and the total sum of pixel values is synonymous to the total sum of luminance.

Next, as illustrated in FIG. 12B, a case where the raindrop detection area 102 is divided into a p number of reference areas $102_1$ through $102_P$ (p being a positive integer of 2 or more) is considered. In this case, in the raindrop detection area 102, when the noise N is evenly present, the noise each of the reference areas $102_1$ through $102_P$ is $N/p$.

In FIG. 12B, there is a signal S detected from the raindrop 103 in the reference area $102_4$. In the reference area $102_4$, the sum of the pixel values is $S+N/p$, and the SN ratio is $S/(N/p)=pS/N$. As described above, by dividing the raindrop detection area 102 into a p number of reference areas $102_1$ through $102_P$, the sensitivity becomes p times as high.

That is to say, by dividing the raindrop detection area 102 into a p number of reference areas $102_1$ through $102_P$, a small amount of signals S from the raindrop 103 can be detected with high sensitivity without adding unnecessary noise. The size of each reference area is preferably a size that includes the diameter of the raindrop 103. This is to prevent a situation of failing to capture a signal S from one raindrop 103.

The number of reference areas may be appropriately set; the number may correspond to the light sources. That is to say, when the number of light sources (for example, light emitting diodes (LED)) is eight, the number of reference areas may be eight. Accordingly, the raindrop signals may be detected with higher sensitivity corresponding to the number of light sources.

A description is given of a method of determining that the raindrop 103 is adhering to the front windscreen 101, by taking as an example where the number of reference areas is eight (p=8). FIG. 13 illustrates an example of the sum of pixel values in each reference area of raindrops detected in the raindrop detection area. As shown in FIG. 13, when rain starts to fall and the raindrop 103 starts adhering to the front windscreen 101, the sum of pixel values in each of the reference areas $102_1$ through $102_8$ (or the average value of pixel values may be used) starts to increase randomly.

As a means for determining that the adhering matter is rain, a threshold Th0 is determined in advance for candidate determination. When the sum of pixel values (sum of luminance) in each of the reference areas $102_1$ through $102_8$ exceeds the threshold Th0, it is determined that the raindrop 103 is adhering to the front windscreen 101 in that area, and the sums of pixel values in reference areas exceeding the threshold Th0 are added together to obtain the total sum of pixel values, which is set as the raindrop amount information. That is to say, in this case, only the sums of pixel values exceeding the threshold Th0 are used as raindrop signals, and a total sum of these sums are expressed as the raindrop amount information, which is an attribute amount substituting the rain amount.

However, when the average value of pixel values in each of the reference areas $102_1$ through $102_8$ is calculated, and the average value of pixel values in each of the reference areas $102_1$ through $102_8$ exceeds the threshold Th0, it may be determined that the raindrop 103 is adhering to the front windscreen 101 in that reference area (exceeding the threshold Th0). In this case, the average values of pixel values of reference areas exceeding the threshold Th0 are added together to obtain the sum of average values of pixel values, which may be used as the raindrop amount information. In the case of FIG. 13, the sums of pixel values of the reference areas $102_2$, $102_4$, $102_5$, and $102_8$ are used and these are added together to calculate the raindrop amount information.

The reason for setting a threshold Th0 is as follows. The sum of pixel values detected from each reference area is not necessarily information based on the adherence of raindrops. For example, the information may be based on adhering foreign matter other than raindrops, such as sand, dust, pollen, and bird dropping. However, usually, the sum of pixel values based on adhering foreign matter other than raindrops does not become as large as the sum of pixel values of adhering raindrops.

Thus, by setting a threshold Th0 to separate the sum of pixel values based on adhering foreign matter and the sum of pixel values based on adhering raindrops, information considered to be based on adhering foreign matter other than raindrops can be determined as noise and removed. As a result, the raindrop information in each reference area can be detected with high precision, and the raindrop amount information in the entire raindrop detection area 102 based on the raindrop information can be calculated with high precision.

In the present application, the raindrop information is the information of the rain amount in each reference area, and the raindrop amount information is the information of the rain amount in the entire raindrop detection area 102 (all reference areas). That is to say, the raindrop information corresponds to the sum of pixel values, and the raindrop amount information corresponds to the total sum of pixel values. Furthermore, the raindrop information (sum of pixel values) is a typical example of adhering-matter-by-area information according to an embodiment of the present invention, and the raindrop amount information (total sum of pixel values) is a typical example of adhering amount information according to an embodiment of the present invention.

For example, the threshold Th0 may be determined by acquiring multiple data items relevant to the sum of pixel values based on adhering raindrops and the sum of pixel values based on various adhering foreign matter, and analyzing the acquired data items. A different threshold may be set for each reference area.

There are cases where a signal from the raindrop 103 appears across the boundary of reference areas laid out next to each other. When a signal from the raindrop 103 appears across the boundary of reference areas, the signal is decomposed into two adjacent reference areas. Thus, the sum of pixel values in each of the two adjacent reference areas does not reach the threshold Th0, and the raindrop 103 may not be detected. In this case, a reference area covering the boundary between reference areas is to be additionally set. Accordingly, no matter where the raindrop 103 adheres, the raindrop 103 can be detected in one of the reference areas without fail.

Furthermore, when acquiring raindrop information in the reference area, the sum of pixel values in an image obtained when the light source 30 is turned off is preferably subtracted from the sum of pixel values in an image obtained when the light source 30 is turned on. This is to remove the background included in the image obtained when the light source 30 is turned on, and to extract only the raindrop signal.

Furthermore, before comparing the sum with the threshold Th0, the sum of pixel values inside each reference area (raindrop information) is to be multiplied by a gain. This is to correct the variation in the light emitting diode (LED) used as the light source 30 and the surrounding light amount of the collimated lens, and to obtain the same raindrop by the same pixel value in each of the reference areas. Furthermore, in order to remove beforehand the noise that is known to exist, such as flare, which occurs optically in each reference area, the sum of pixel values inside each reference area (raindrop information) is preferably multiplied by a gain and the offset is preferably subtracted.

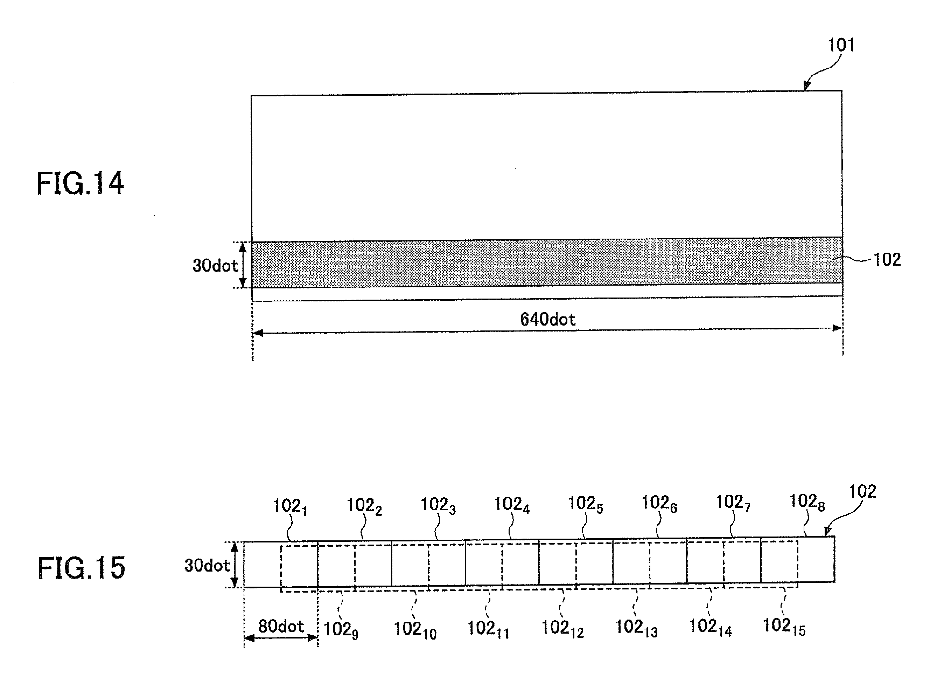

With reference to a flowchart, a description is given of specific operations of the raindrop amount information calculating unit 60. As an assumption, in the present embodiment, as one example, the raindrop detection area 102 is provided at the bottom edge side of the image sensor 43, as illustrated in FIG. 14.

The number of pixels of the image sensor 43 may be arbitrarily set; for example, a typical VGA size (640 pixels $\times$ 480 pixels). In this case, when the raindrop detection area is set to be approximately 640 pixels $\times$ 30 pixels, a regular imaging area (for taking an image of an area in front of the vehicle) and the securing of the raindrop detection area can be balanced. Furthermore, to facilitate the calculating process, the raindrop detection area may be set to, for example, 512 pixels$\times$ 32 pixels or 512 pixels $\times$ 64 pixels to attain a power-of-two.

Furthermore, in the present embodiment, as one example, as shown in FIG. 15, an image area of the image sensor 43 corresponding to the raindrop detection area 102 is divided into eight reference areas $102_1$ through $102_8$ that are laid out without gaps. Furthermore, it is assumed that seven reference areas $102_9$ through $102_{15}$ covering the boundaries between adjacent reference areas are provided. Furthermore, the reference areas are made to correspond to areas of 30 pixels $\times$ 80 pixels of the image sensor 43. In FIG. 15, as a matter of convenience so that the diagram is easy to view, the reference areas $102_1$ through $102_8$ and the reference areas $102_9$ through $102_{15}$ are vertically displaced from each other.

As described above, in the present embodiment, as one example, the image area of the image sensor 43 corresponding to the raindrop detection area 102 is divided into reference areas that are laid out without gaps; however, there may be gaps between the reference areas as long as a minimum raindrop can be detected.

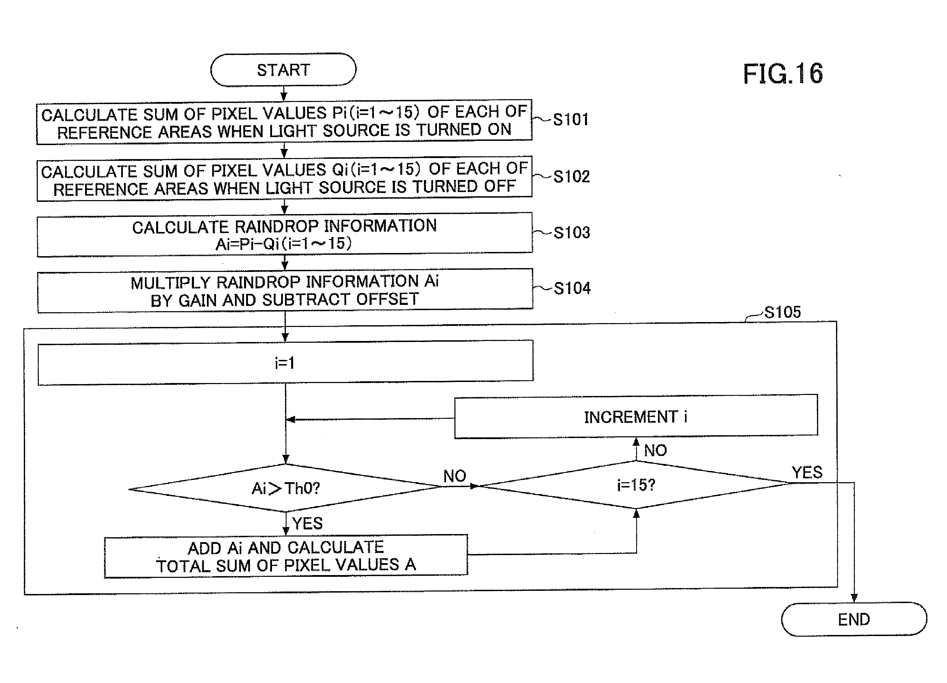

FIG. 16 is a flowchart for describing an operation by the raindrop amount information calculating unit. For example, a program corresponding to the flowchart of FIG. 16 may be stored in the ROM 62 of the raindrop amount information calculating unit 60, and may be executed by the CPU 61 of the raindrop amount information calculating unit 60. Alternatively, the raindrop amount information calculating unit 60 may be provided inside the image analyzing unit 50, and the process performed by the raindrop amount information calculating unit 60 may be executed as a program of the CPU 51 of the image analyzing unit 50, or as the hardware logic 54, or as a combination of these formats.

First, in step S101, the raindrop amount information calculating unit 60 acquires, for example, the imaging information of the raindrop detection area 102 obtained by turning on the light source 30 and radiating light from the light source 30 when the vehicle is moving, and calculates the sum of pixel values Pi (i=1 through 15) of each of the reference areas $102_1$ through $102_{15}$. Here, the pixel value (luminance) per pixel is expressed by 10 bits (0 through 1023). That is to say, the pixel value (luminance) of each pixel is expressed by one of the values among 0 through 1023.

Next, in step S102, the raindrop amount information calculating unit 60 acquires, for example, the imaging information of the raindrop detection area 102 obtained by turning off the light source 30 while the vehicle is moving, and calculates the sum of pixel values Qi (i=1 through 15) of each of the reference areas $102_1$ through $102_{15}$.

Next, in step S103, the raindrop amount information calculating unit 60 subtracts the sum of pixel values Qi (i=1 through 15) obtained when the light source 30 is turned off in step S102 from the sum of pixel values Pi (i=1 through 15) obtained when the light source 30 is turned on in step S101, and calculates raindrop information Ai (i=1 through 15). At this time, when Ai<0 is satisfied, Ai is handled as Ai=0. In this case, the pixel value (luminance) per pixel is expressed by ten bits (0 through 1023), and therefore to express each Ai, $1023\times30\times80=22$ bits are necessary.

Next, in step S104, the raindrop amount information calculating unit 60 multiplies each Ai calculated in step S103 by a gain, and subtracts an offset. The range of the gain by which each Ai is to be multiplied may be appropriately determined; for example, a multiplier may be used to multiply the Ai by a gain of eight bits (0 through 255).

When each Ai is 22 bit, Ai is multiplied by a gain of eight bits, and the lower six bits are removed, so that gain adjustment can be made in a range of substantially zero times through approximately four times. The gain may be set for each reference area. The range of offset to be subtracted from each Ai that has been multiplied by the gain may be appropriately determined; for example, a subtractor may be used to subtract an offset of 24 bits (0 through 16777216).

Next, in step S105, Ai (i=1 through 15) obtained by multiplying a gain and subtracting an offset in step S104 are sequentially compared with the threshold Th0 set in advance. Only Ai that satisfies Ai>Th0 are added to calculated a total sum A of pixel values. For example, when only the raindrop information $A_2$, $A_4$, $A_5$, $A_8$ of reference areas $102_2$, $102_4$, $102_5$, $102_8$ exceed Th0, the total sum of pixel values $A=A_2+A_4+A_5+A_8$ is obtained. When each Ai is 22 bits, in order to express a total sum of pixel values A, $1023\times30\times80\times15\times4=28$ bits are necessary. In this case, 15 is the number of reference areas, and four is the maximum value of the gain.

As described above, the total sum A of pixel values expressing raindrop amount information is calculated. By further comparing the total sum A of pixel values with a predetermined threshold (for example, five thresholds Th1 through Th5), the level of the raindrop amount can be known.

As described above, in the present embodiment, the image area (for example, an area of 30 pixels $\times$ 640 pixels) of the image sensor 43 corresponding to the raindrop detection area 102 is divided into plural reference areas $102_1$ through $102_8$ laid out without gaps. Furthermore, reference areas $102_9$ through $102_{15}$ covering the boundaries of adjacent reference areas among the reference areas $102_1$ through $102_8$ are provided, and the raindrop information in each reference area is calculated. Then, the raindrop information in each reference area is compared with a predetermined threshold Th0, and the raindrop amount information is calculated based on only the raindrop information exceeding a predetermined threshold Th0.

Accordingly, raindrop information that does not exceed the threshold Th0, i.e., information considered to be based on adhering foreign matter other than raindrops such as sand, dust, pollen, and bird dropping, can be determined as noise and removed. As a result, it is possible to calculate raindrop information with high precision, and to calculate raindrop amount information based on this raindrop information. That is to say, a raindrop detecting device and a raindrop detecting method with improved detection sensitivity can be realized.

Furthermore, by providing reference areas $102_9$ through $102_{15}$ covering the boundaries of adjacent reference areas among the reference areas $102_1$ through $102_8$, raindrops can be detected even when a signal from the raindrop appears across the boundaries of the reference areas $102_1$ through $102_8$ laid out next to each other. That is to say, the raindrop can be detected without fail in one of the reference areas, regardless of where the raindrop has adhered to in the raindrop detection area 102.

Furthermore, in the present embodiment, when acquiring raindrop information in each reference area, the sum of pixel values in an image obtained when the light source 30 is turned off is subtracted from the sum of pixel values in an image obtained when the light source 30 is turned on. Accordingly, the background included in the image obtained when the light source 30 is turned on is removed, and only the signal from the raindrop is extracted.

Furthermore, in the present embodiment, before comparing the raindrop information in each reference area with the predetermined threshold Th0, the raindrop information is multiplied by a gain, and an offset is subtracted. By multiplying a gain, the variation in the light emitting diode (LED) used as the light source 30 and the surrounding light amount of the collimated lens is corrected, and the same raindrop is obtained by the same pixel value in each of the reference areas. Furthermore, by subtracting the offset, noise such as flare, which occurs optically in each reference area, can be removed beforehand.

Responding to splash

A description is given of an example of the raindrop amount information calculating unit capable of performing raindrop detection even more stably and performing raindrop detection without reducing the reaction speed even when the raindrop information changes rapidly (splash).

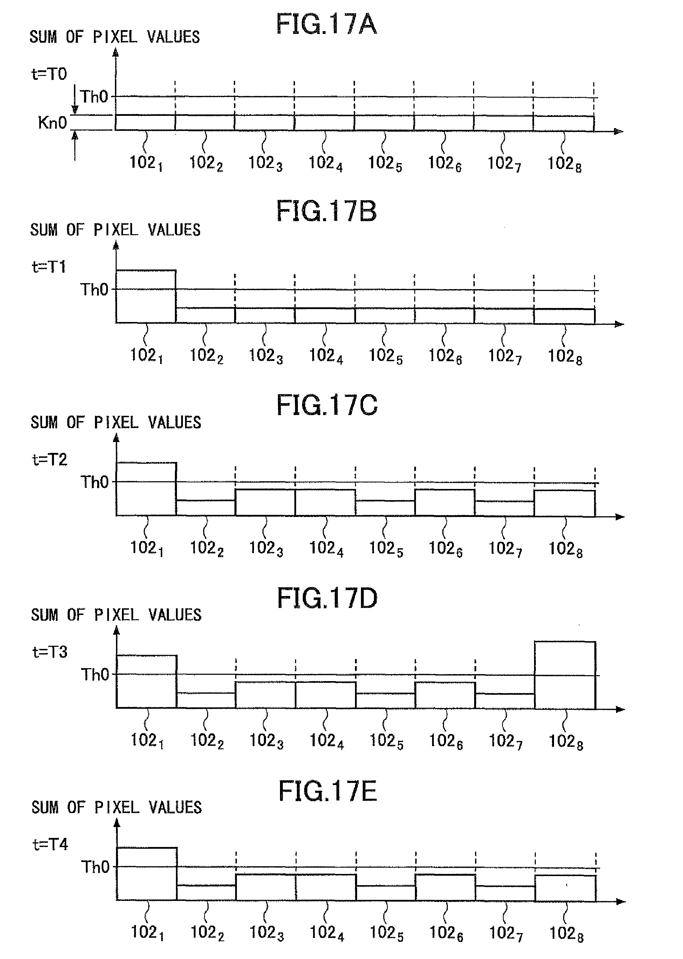

FIGS. 17A through 17E schematically illustrate states at time t=T0 through T4 of the sums of pixel values of each of the reference areas in a case where the raindrop detection area 102 is divided into eight reference areas $102_1$ through $102_8$ as illustrated in FIG. 13. The times t=T0 through T4 indicate timings when images for detecting raindrops are taken and the final calculation result (raindrop amount information) is obtained. The time intervals at which images are taken may be, for example, approximately 100 ms.

FIG. 17A illustrates a case where there is no rainfall at time t=T0, and Kn0 is noise that is constantly generated. The noise may be caused by sunlight entering from the front windscreen, or the noise may be caused electrically. Th0 is a threshold for the pixel value as described above, and when the sum of the pixel values (sum of luminance) inside the reference areas $102_1$ through $102_8$ exceeds the threshold Th0, it is determined that the raindrop 103 has adhered to the front windscreen 101 in that reference area, and this reference area is used for calculating the raindrop amount information.

FIG. 17B illustrates a state where a raindrop has appeared in the reference area $102_1$ at time t=T1. Furthermore, FIG. 17C illustrates a state where the noise level has increased at time t=T2. Furthermore, FIG. 17D illustrates a state where a raindrop has appeared in the reference area $102_8$ at time t=T3. Furthermore, FIG. 17E illustrates a state where the sum of pixel values appearing in the reference area $102_8$ at time t=T3 is noise generated only at time t=T3, and that the noise has disappeared at time t=T4.

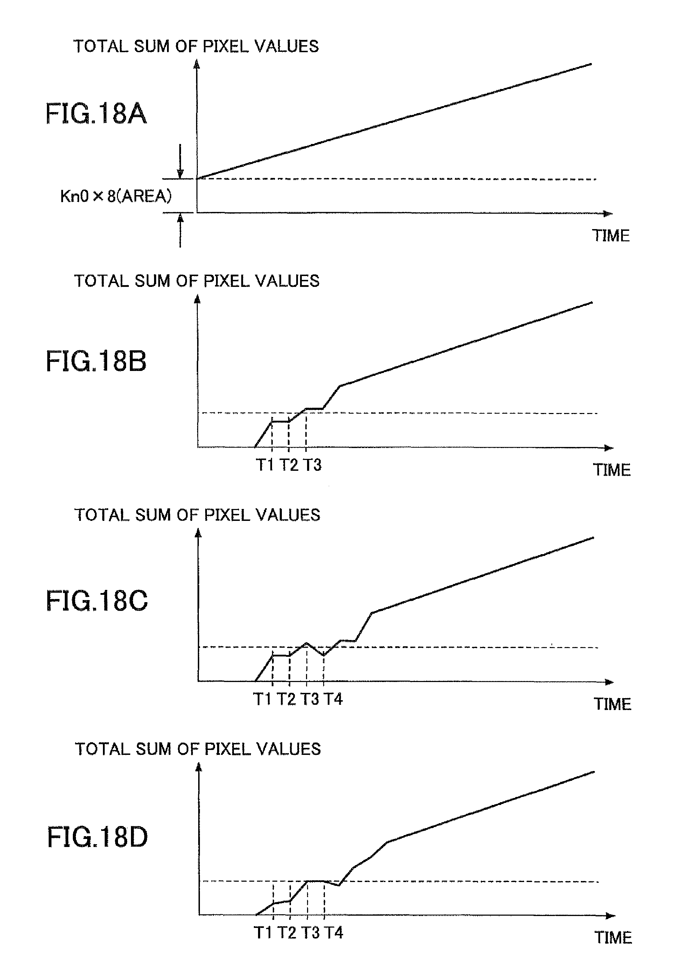

FIGS. 18A through 18D illustrate the relationship between the total sum of pixel values and the time. FIG. 18A illustrates the relationship between the total sum of pixel values (total sum of luminance values) output by the image sensor 43 when there is a certain amount of rainfall (adhering raindrops) per unit time, and the time, in a case where the process of FIG. 16 is not performed. $Kn0 \times 8$ indicated by a dashed line is the total sum of noise constantly generated in the reference areas $102_1$ through $102_8$.

FIG. 18B is a graph indicating the temporal changes in the total sum of pixel values in the reference areas $102_1$ through $102_8$, when the rainfall has shown the temporal changes illustrated in FIGS. 17A through 17D and then there has been a fixed rainfall thereafter, in a case where the process of FIG. 16 is performed.

In FIG. 18B, the sum of the pixel values in any of the reference areas does not exceed the threshold Th0 until the time t=T1, and therefore the total sum of pixel values is zero. Then, at time t=T1, the sum of pixel values in the reference area $102_1$ exceeds the threshold Th0, and therefore the sum of pixel values in the reference area $102_1$ is output as the total sum of pixel values. Note that at time t=T2, the output (total sum of pixel values) does not change.

At time t=T3, the sum of pixel values in the reference area $102_8$ exceeds the threshold Th0, and therefore the sum of the pixel values in the reference area $102_8$ is added to the sum of the pixel values in the reference area $102_1$, and the result of the addition is output as the total sum of pixel values. The subsequent states are not illustrated, but when the sum of the pixel values gradually increases for each of the reference areas $102_1$ through $102_8$, and the sums of pixel values in all reference areas exceed the threshold Th0, the total sum of pixel values changes in the same manner as in FIG. 18A. As described above, by performing the process illustrated in FIG. 16, the pixel values according to raindrops that have been buried in the noise level (Kn0×8 areas) can also be detected.

Incidentally, as described with reference to FIG. 17D, there may be cases where the sum of pixel values in the reference area $102_8$ at time t=T3 is not raindrop information, but noise generated only at time t=T3. In this case, as described with reference to FIG. 17E, the noise in the reference area $102_8$ disappears at time t=T4, and therefore as illustrated in FIG. 18C, the total sum of pixel values returns to the same level as that of at the time point of time t=T2.

In the process of FIG. 16, the sum of pixel values in each reference area does not become a calculation object until the sum exceeds the threshold Th0, and once the sum exceeds the threshold Th0, the sum becomes a calculation object, and therefore such a rapid change can be easily captured. When the wiper of the vehicle is operated based on such a result, the wiper moves in an unstable manner, such as moving fast in response to the noise at time t=T3 and then immediately stopping.

Such an unstable operation of the wiper can be prevented by reducing a rapid change by performing calculation in consideration of the present and past states. Specifically, an unstable operation can be prevented by performing an averaging process on the total sum of pixel values. One example of the averaging process is a moving averaging process. When an averaging process such as a moving averaging process is performed, as indicated by the relationship between the total sum of pixel values and the time illustrated in FIG. 18D, the change in the total sum of pixel values at time t=T4 can be reduced compared to the case of FIG. 18C. In FIG. 18D, the rise at time t=T1 slackens to some extent, but the raindrop has been detected, and therefore by decreasing the threshold Th0, there is no problem in minimum raindrop detection.

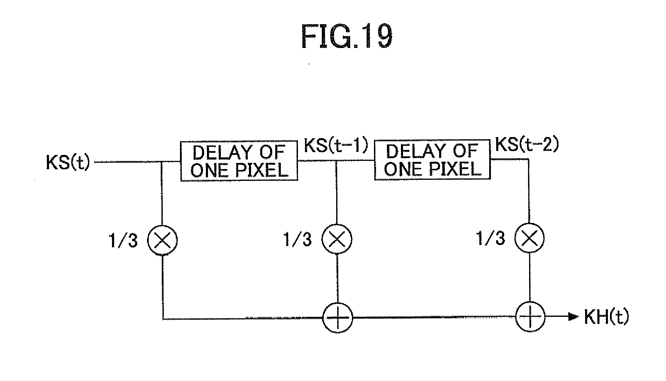

FIG. 19 illustrates an example of a moving averaging process. In the example of FIG. 19, the total sum of pixel values KS(t) at a time t, the total sum of pixel values KS(t-1) of an immediately previous time, and the total sum of pixel values KS(t-2) of a time before the immediately previous time are used to calculate KH(t)=1/3×KS(t-2)+1/3×KS(t-1)+1/3×KS(t). However, the number of the total sums of pixel values for obtaining an average according to the state of noise may be changed. Furthermore, the coefficients may be other than 1/3, 1/3, 1/3; in consideration of the properties of the filter to be realized, for example, the coefficients may be 1/4, 1/2, 1/4. Furthermore, a known averaging process (for example, IIR filter) (not shown) may be used.

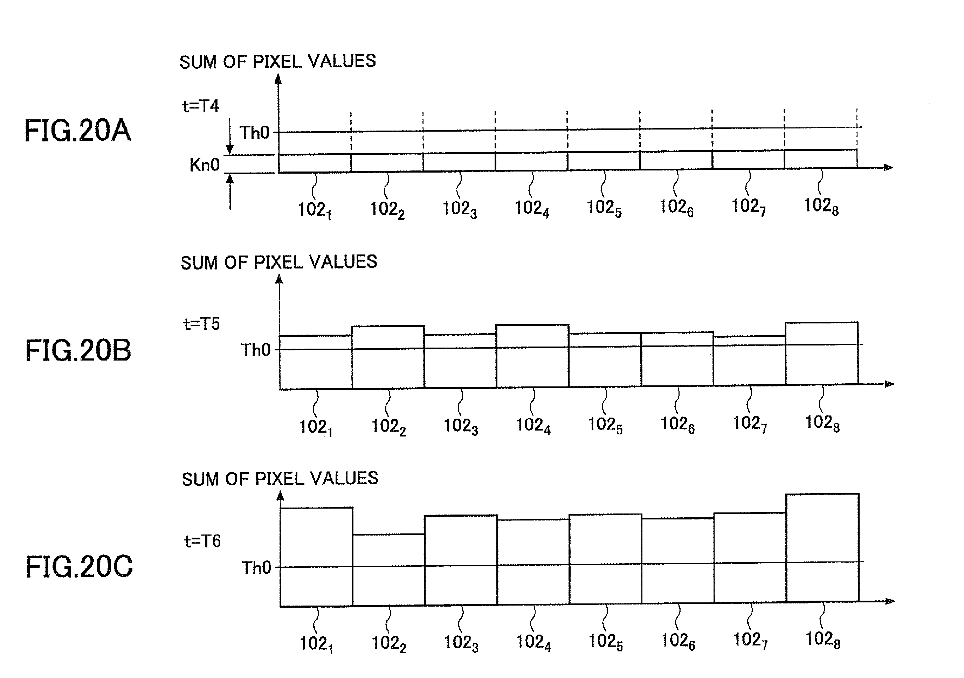

Next, a case where the sum of pixel values has changed as illustrated in FIGS. 20A through 20C within a short period of time is considered. FIG. 20A illustrates a state where there is no rainfall at time t=T4, and Kn0 is noise that is constantly generated. FIG. 20B illustrates a case where raindrops have appeared in all reference areas at time t=T5. FIG. 20C illustrates a case where the amount of raindrops appearing in all reference areas has further increased at time t=T6.

After FIG. 20C, the amount of raindrops may return to the state of time t=T4 illustrated in FIG. 20A, or the amount of raindrops appearing in all reference areas may further increase. In a case where the amount of raindrops returns to the state of time t=T4 illustrated in FIG. 20A after FIG. 20C, for example, water may have splashed onto the front windscreen 101 when an oncoming vehicle runs through a deep puddle, or a shower may have suddenly fallen.

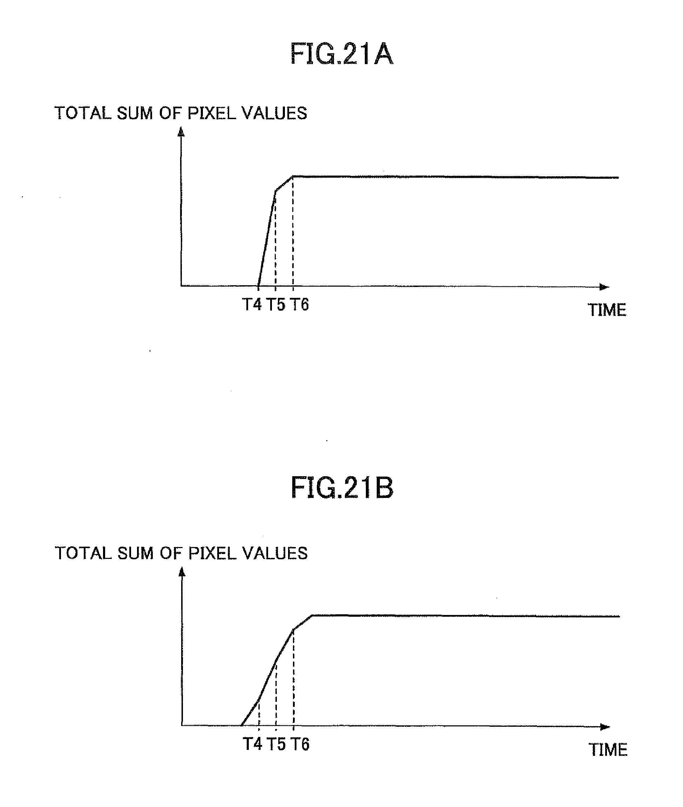

FIGS. 21A and 21B illustrate the relationship between the total sum of pixel values and the time in the above case (when the raindrop amount returns to the state of time t=T4). However, FIG. 21A illustrates the total sum of pixel values (raindrop amount information) in a case where the moving averaging process (filter process) illustrated in FIG. 19 is not performed, and FIG. 21B illustrates the total sum of pixel values (average raindrop amount information) in a case where the moving averaging process (filter process) illustrated in FIG. 19 is performed. The average raindrop amount information is a typical example of average adhering amount information according to an embodiment of the present invention.

As illustrated in FIG. 21A, when the moving averaging process is not performed, at time t=T5 and time t=T6, the total sum of pixel values increases at once, and therefore the total sum of pixel values rapidly changes (increases) from time t=T4 to time t=T5 and time t=T6. In this case, a large amount of raindrops adhere to the front windscreen 101 and the view is blocked, and therefore the wiper needs to be operated immediately (splash response operation).

Meanwhile, as illustrated in FIG. 21B, when a moving averaging process is performed, the rise of the waveform (graph) becomes slack, and therefore there may be cases where the wiper cannot be operated immediately. Thus, when the total sum of pixel values changes rapidly, it is preferable that the waveform (graph) indicating the relationship between the total sum of pixel values and the time does not become slack.

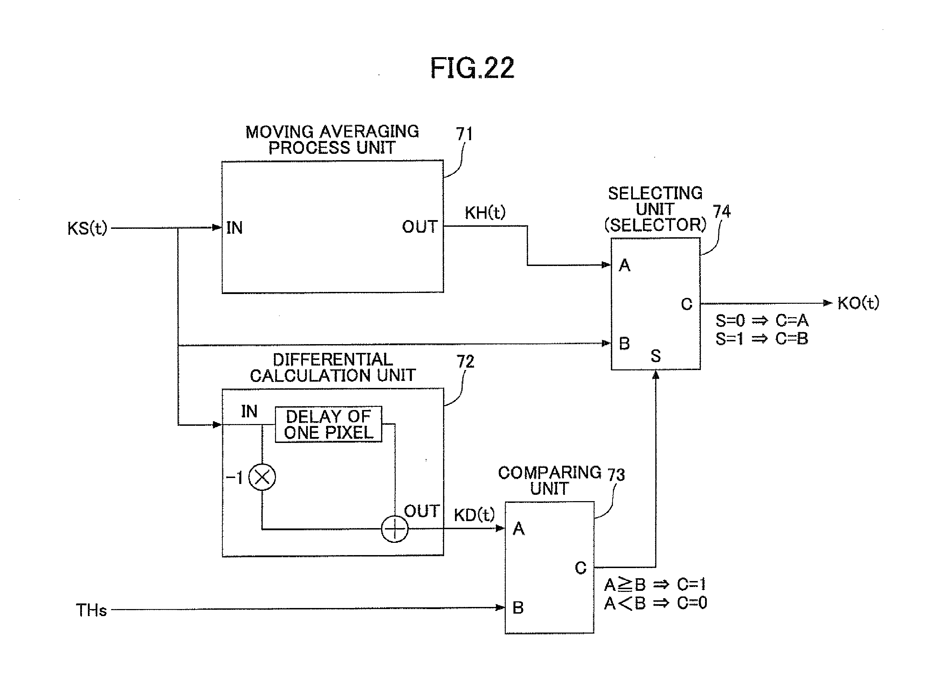

FIG. 22 is a block diagram illustrating a specific process for responding to a rapid change in the raindrop information (to prevent the waveform (graph) from slackening). In FIG. 22, first, a moving averaging process unit 71 performs the above-described moving averaging process, and a differential calculation unit 72 performs a differential calculation process. A differential calculation process is to calculate the differential signal indicating the degree of changes of the adhering amount information with respect to the time.

Specifically, the differential calculation unit 72 calculates KD(t)=-1×KS(t-1)+KS(t), which is the difference (change amount of unit time) between the total sum KS(t) of pixel values at time t and the total sum KS(t-1) of pixel values immediately before time t. The calculation result at differential calculation unit 72 is input to the A terminal of a comparing unit 73, and is compared with a second threshold THs input to a B terminal of the comparing unit 73.

When the calculation result at the differential calculation unit 72 is greater than or equal to a second threshold THs, the comparing unit 73 outputs "1" from a C terminal to an S terminal of a selecting unit 74 functioning as a selector. When the calculation result is less than the second threshold THs, the comparing unit 73 outputs "0" from a C terminal to an S terminal of a selecting unit 74. To the A terminal of the selecting unit 74, a moving average value KH(t), which is the total sum of pixel values (average raindrop amount information) after the moving averaging process, is input. To the B terminal of the selecting unit 74, a total sum KS(t) of pixel values at time t, which is the total sum of pixel values before the moving averaging process, is input.

When the signal input to the S terminal from the comparing unit 73 is "0", the selecting unit 74 outputs, from the C terminal, a moving average value KH(t) as an output KO(t). Furthermore, when the signal input to the S terminal from the comparing unit 73 is "1", the selecting unit 74 outputs, from the C terminal, a total sum KS(t) of pixel values at time t as an output KO(t). As described above, in the present embodiment, when the change amount of the rain amount in a unit time is greater than or equal to the second threshold THs, the total sum of pixel values after the moving averaging process is not selected, and the total sum of pixel values before the moving averaging process (the present total sum of pixel values) is selected.

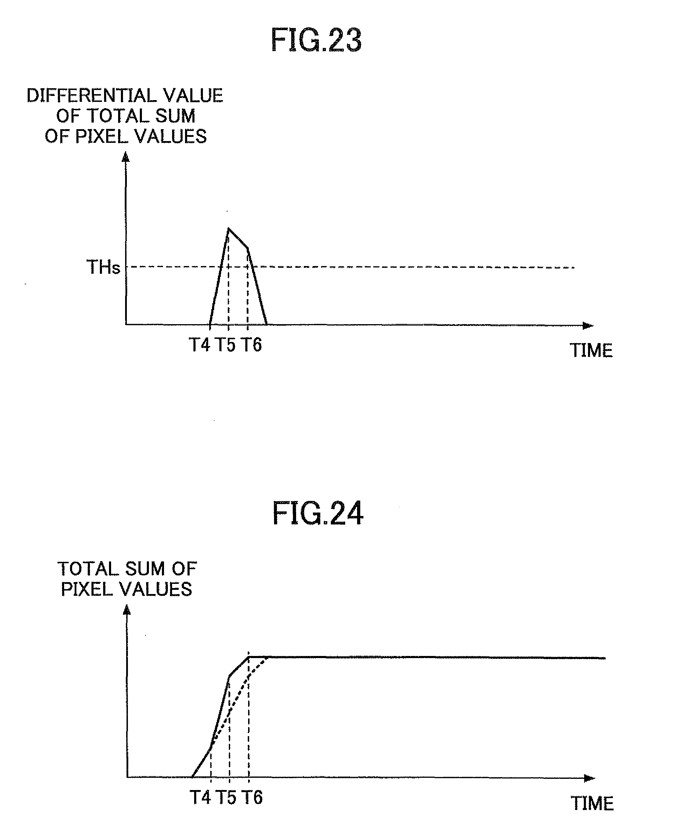

FIG. 23 illustrates an example of results of the differential calculation process performed at the differential calculation unit 72. As illustrated in FIG. 23, the second threshold THs is set to be a relatively high value so as not to affect the moving averaging process, and at time t=T5 and T6, the total sum of pixel values at FIG. 21A is selected instead of the total sum of pixel values at FIG. 21B, and therefore the waveform (graph) as indicated by a solid line in FIG. 24 is formed. That is to say, a rapid change without slackening is output. The dashed line in FIG. 24 indicates the waveform (graph) of FIG. 21B as a matter of comparison.

In the differential calculation process by the differential calculation unit 72 in FIG. 22, the coefficient may be changed and the range of pixels to be used may be increased, according to the change to be detected. Furthermore, instead of the differential calculation process, secondary differentiation detection such as a known Laplacian filter (not shown) may be performed.

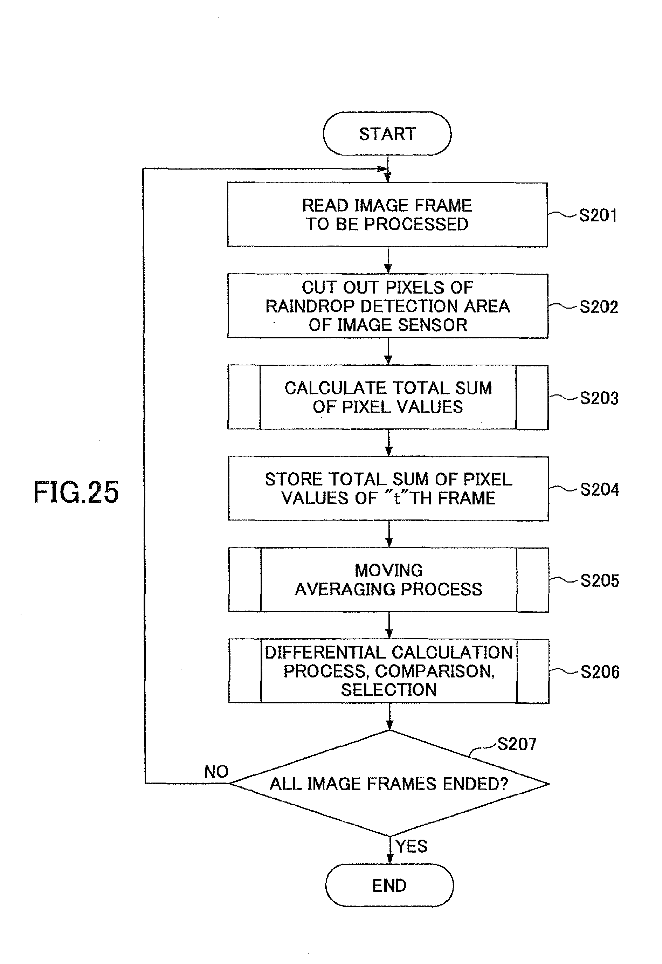

The process described above is collectively illustrated in FIGS. 25 through 26B. As illustrated in FIG. 25, first, in step S201, the raindrop amount information calculating unit 60 reads image frames to be processed at every predetermined time point (time t=T0, T1, T2...). Next, in step S202, the raindrop amount information calculating unit 60 cuts out pixels of the raindrop detection area 102 of the image sensor 43.

Next, the raindrop amount information calculating unit 60 calculates the sum of pixel values in each reference area similar to the process illustrated in FIG. 16, obtains the total sum of pixel values (step S203), and stores the total sum of pixel values KS(t) of the "t"th image frame (step S204).

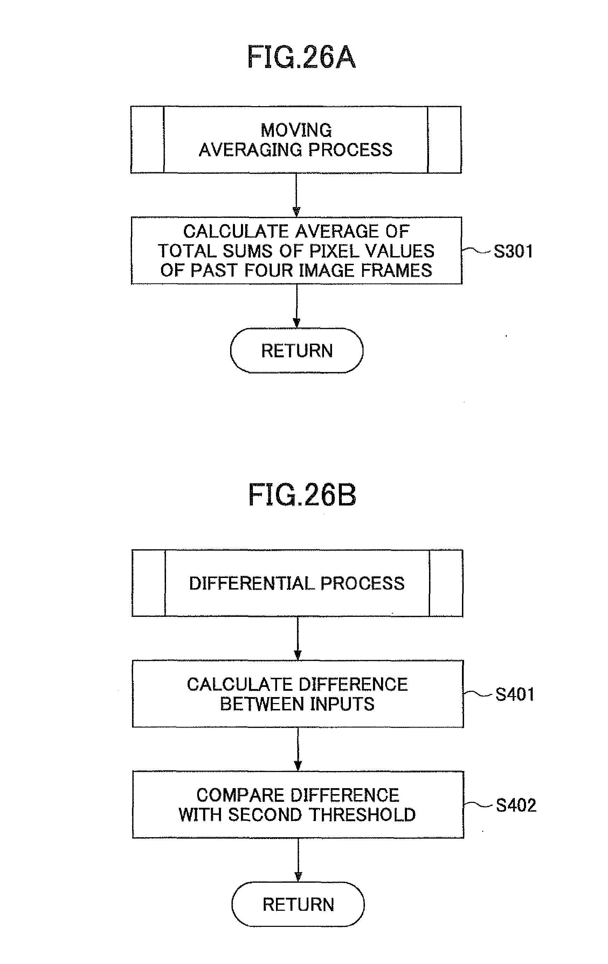

Next, in step S205, the raindrop amount information calculating unit 60 executes a moving averaging process. For example, as indicated in step S301 of FIG. 26A, the moving averaging process unit 71 calculates a moving average value KH(t) by calculating the average of total sums of pixel values of four image frames Ks(t-3), KS(t-2) , KS(t-1), and KS(t) (formula 1). However, calculating the moving average value from the past four image frames is one example; the moving average value may be calculated from the past two, three, or five or more image frames.

$$KH(t) = 1/4\,KS(t-3) + 1/4\,KS(t-2) + 1/4\,KS(t-1) + 1/4\,KS(t)$$

$$\cdots formula\ 1$$

Next, in step S206, the raindrop amount information calculating unit 60 executes a differential calculation process, a comparison, and a selection. For example, as indicated in step S401 of FIG. 26B, the differential calculation unit 72 performs a differential calculation process. Specifically, as indicated in formula 2, the total sum of pixel values KS(t-1) at time t-1 is subtracted from the total sum of pixel values KS(t) at time t, to calculate a difference KD(t) at time t. In formula 2, t>=2, KD(1)=0 are satisfied.

$$KD(t) = KS(t) - KS(t-1) \qquad \cdots formula\ 2$$

Then, for example, as indicated in step S402 of FIG. 26B, the comparing unit 73 compares the difference KD(t) with the second threshold THs, and when the difference KD(t) is greater than or equal to the second threshold THs, the comparing unit 73 outputs "1" as the comparison result. Furthermore, when the difference KD(t) is less than the second threshold THs, the comparing unit 73 outputs "0" as the comparison result.

Then, when "1" is input from the comparing unit 73, the selecting unit 74 outputs a total sum of pixel values KS(t) at time t as the output KO(t). Furthermore, when "0" is input from the comparing unit 73, the selecting unit 74 outputs a moving average value KH(t) as the output KO(t). That is to say, when KD(t)≥THs is satisfied, KO(t)=KS(t), and when KD(t)<THs is satisfied, KO(t)=KH(t).

Next, in step S207, the raindrop amount information calculating unit 60 determines whether the reading of all image frames has ended, and when the reading has not ended (NO in step S207), the process of steps S201 through S206 is repeated. When the reading of all frames has ended (YES in step S207), the process ends.

As described above, by introducing a moving averaging process on the total sum of pixel values, noise components that vary by the times of raindrop information are removed, and raindrop detection can be stably performed. Furthermore, by appropriately selecting the total sum of pixel values before the moving averaging process and the total sum of pixel values after the moving averaging process according to the amount of rainfall, raindrop detection can be performed without decreasing the reaction speed even when there is a rapid change (splash) in the raindrop information.

Reaction to splash and reduction of impact of noise

In FIG. 18A, the noise level in each reference area is Kn0 which is a fixed value; however, the actual noise level may not necessarily be a fixed value because the actual noise level changes due to variations in the environment and the detector. Thus, for example, the variable noise level has been measured, the maximum value of the noise level has been predicted, and the noise level of the predicted maximum value has been set. Therefore, there has been a problem that even when the noise level is low in the actual usage environment, the raindrop amount below the maximum value of the noise level that has been set in advance cannot be detected.

That is to say, the noise level Kn0 in each reference area illustrated in FIG. 18A is the maximum value of noise level that has been predicted in advance, and even when the actual noise level is less than Kn0, the raindrop amount below Kn0 cannot be detected. This problem can be solved by introducing a weighted averaging process (weighted addition averaging process). In the following, a detailed description is given of a method of solving this problem.

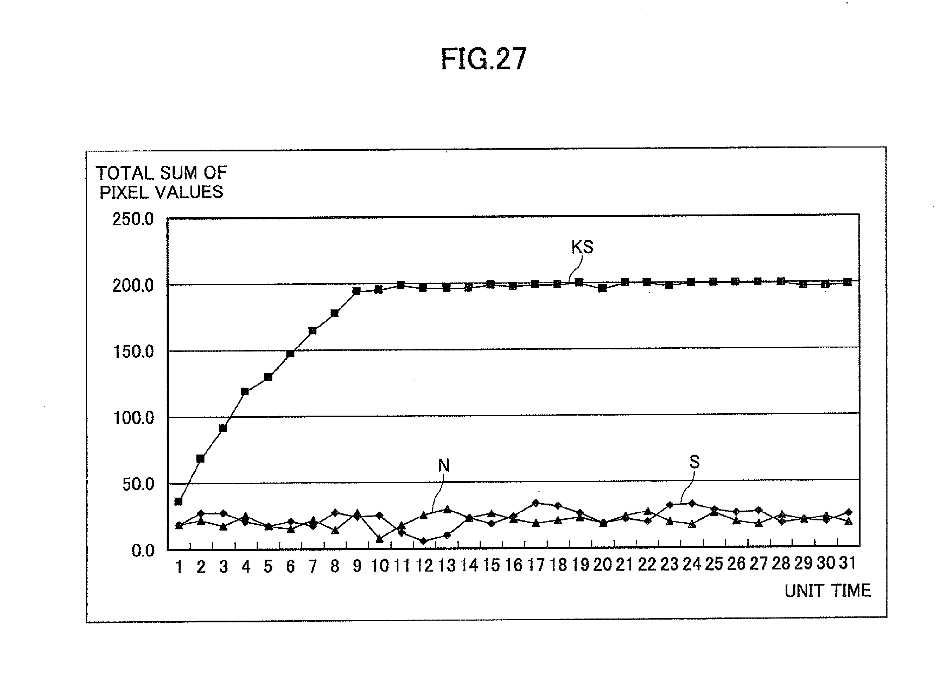

FIG. 27 is a graph simulating the output of a raindrop detection process on the amount of raindrops adhering to the front windscreen. In FIG. 27, the vertical axis indicates the total sum of pixel values, and the horizontal axis indicates the unit time. The unit time is the time (time or each frame) taken for sampling an image by the image sensor 43, and may be set at, for example, approximately 100 ms. When the unit time is 100 ms, the maximum value of the horizontal axis in FIG. 27 is $31\times100$ ms=3.1 s.

In FIG. 27, KS indicates the total sum of pixel values, N indicates the noise pixel value per unit time, and S indicates the pixel value per unit time. In this case, the total sum of pixel values is calculated as described above by obtaining information of the raindrop adhering amount (area) on a front windscreen that has been subjected to photoelectric conversion by the image sensor 43, converting this information into pixel data, and obtaining the total sum of the values of the pixel data; this total sum is obtained by adding together the adhering-matter-by-area information (sum of pixel values) indicating the amount of adhering matter in each of the reference areas. Thus, the total sum of pixel values may be referred to as "combined adhering matter information".

Furthermore, the noise pixel value per unit time indicates random noise such as electrical noise and outside light noise occurring per unit time. Furthermore, the pixel value per unit time indicates the pixel value per frame sampled per unit time by the image sensor 43. The total sum of pixel values KS(t) at time t is the cumulative sum of the pixel value per unit time S(t) and the noise pixel value per unit time N(t). However, in reality, the noise pixel value per unit time N is unknown, and the total sum is the sum of pixel values per unit time S, and therefore these cannot be separated as illustrated in the graph of FIG. 27.

When the raindrops 103 adhere to the entire area of the raindrop detection area 102, the pixel value does not increase any further, and therefore the total sum of pixel values becomes saturated. In FIG. 27, the total sum of pixel values KS becomes saturated near time t=9.

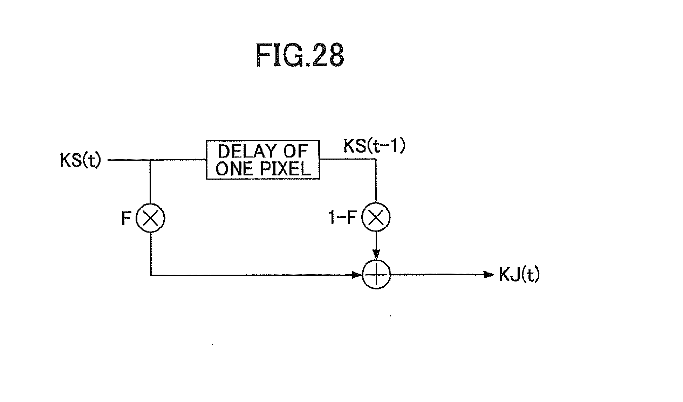

For example, a weighted average value KJ can be calculated by the block diagram relevant to a weighted averaging process of FIG. 28, which is expressed by the following formula 3.

$$KJ(t)=F\times KS(t)+(1-F)\times KS(t-1)\ (t\geq2,\ KJ(1)=KS(1),\ F:0\sim1)$$

$$\cdots formula\ 3$$

By storing the total sum of pixel values KS at each time in a memory in advance, the weighted average value KJ can be calculated by using information after a predetermined time. Furthermore, the weighted average value KJ may be calculated from the total sum of pixel values at three or more time points.

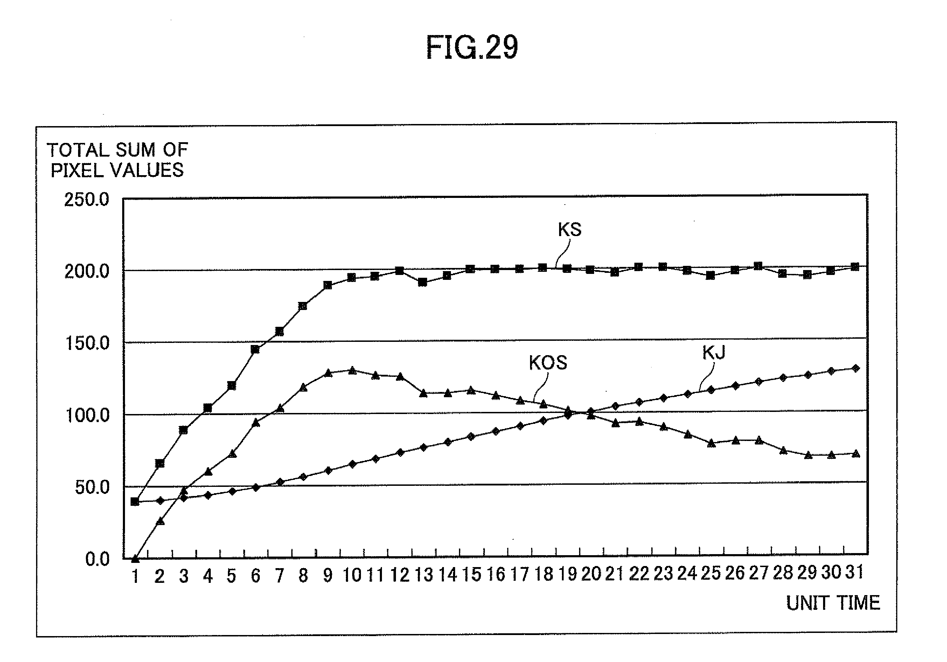

FIG. 29 is a graph of a case where the noise of a direct current component is removed by performing a weighted average difference process. In FIG. 29, in order to reduce the impact of the variation in the total sum of pixel values KS(t), F=1/32 is set in formula 3. In FIG. 29, KS indicates the total sum of pixel values, KJ indicates the pixel value subjected to weighted averaging (weighted average value), and KOS indicates the output pixel value.

In FIG. 29, it can be seen that noise of a direct current component has been removed from the output pixel value KOS. When the saturated state of the total sum of pixel values KS continues, the output pixel value KOS gradually decreases. However, the wiper 360 usually operates to remove the raindrops 103 adhering to the front windscreen 101 and the adhering amount of raindrops is reset, so there is no problem.

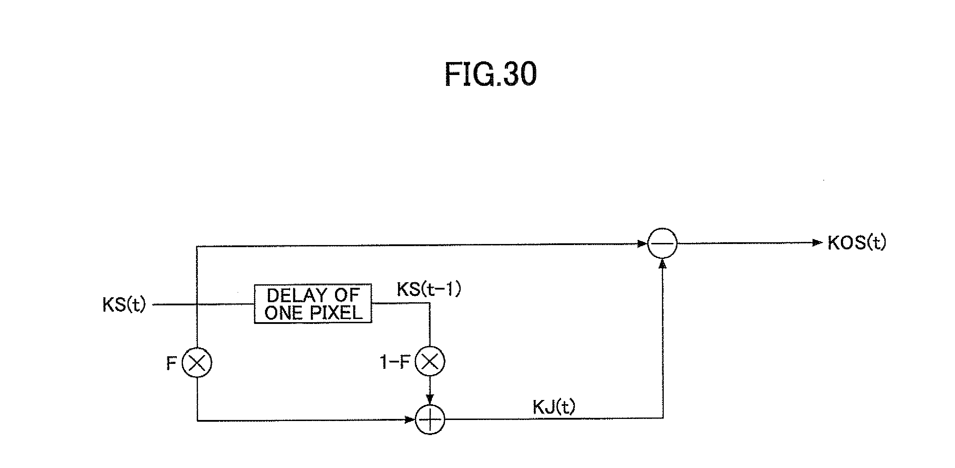

For example, the output pixel value KOS (weighted average differential value) can be calculated by a block diagram relevant to a weighted average differential process of FIG. 30, which is expressed by the following formula 4. KOS(t)=KS(t)-KJ(t) (when KOS(t)<0 is satisfied,

$$\mathrm{KOS(t)=0)}\quad \cdots\mathrm{formula\ 4}$$

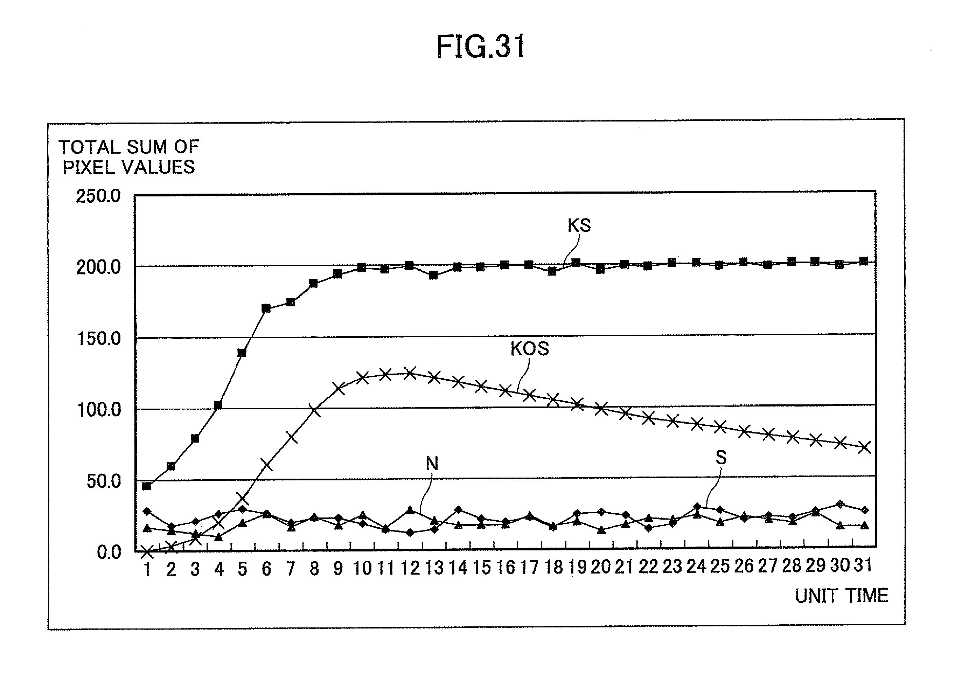

FIG. 31 is a graph of a case where a moving averaging process is further applied to the output pixel value, in the state of FIG. 29. In the output pixel value KOS (moving average value of weighted average differential value) in FIG. 31, it can be seen that small noises (high frequency noises) have attenuated compared to the output pixel value KOS (weighted average differential value) of FIG. 29.

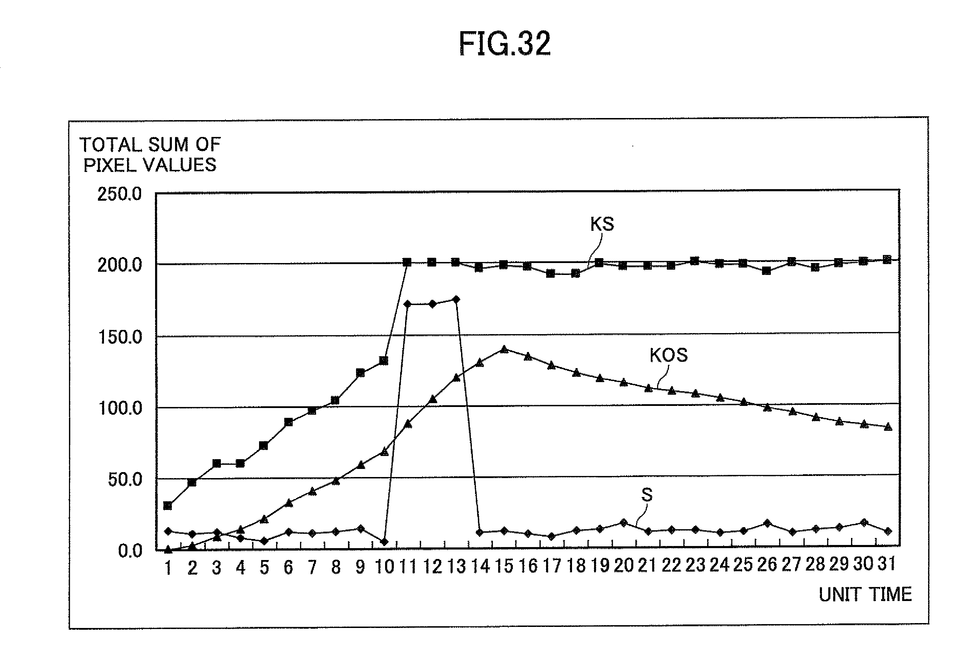

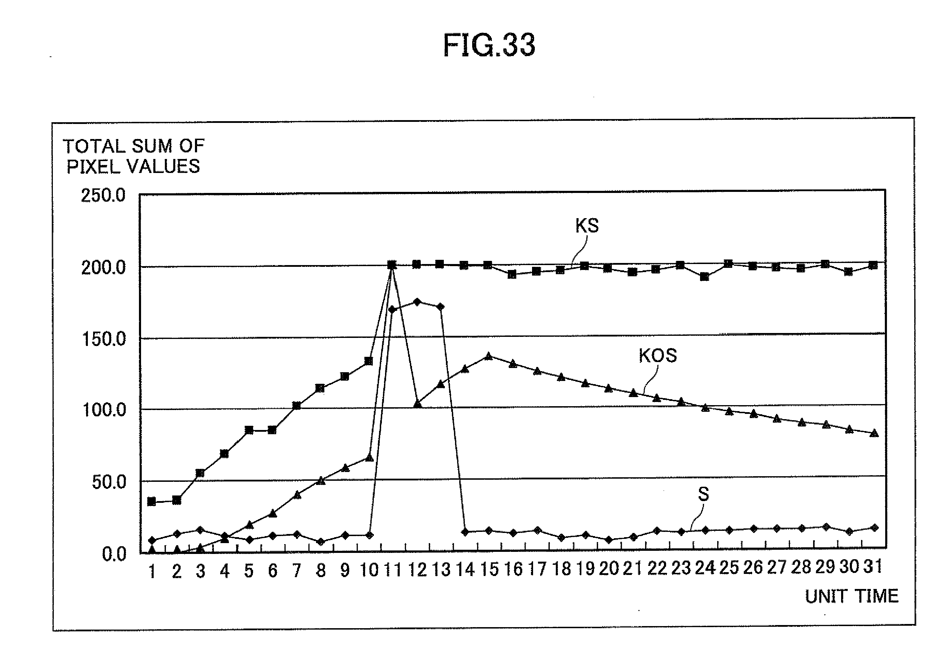

FIGS. 32 and 33 are graphs indicating the simulation result with respect to rapid changes (splash) in the raindrop information. FIG. 32 is graph of a case where a moving averaging process is performed on the output pixel value, but the differential calculation process described with reference to FIG. 22 is not introduced. Furthermore, FIG. 33 is a graph of a case where a moving averaging process is performed on the output pixel value, and the differential calculation process described with reference to FIG. 22 is introduced.

In FIG. 32, the differential calculation process is not introduced, and therefore even though the pixel value S per unit time is rising to a level immediately before saturation at times t=11, 12, 13, the output pixel value KOS is gradually changing.

Meanwhile, in FIG. 33, the differential calculation process is introduced, and therefore when the result of the differential calculation process is greater than or equal to a predetermined threshold, the total sum of pixel values after the moving averaging process is not selected, and the total sum of pixel values before the moving averaging process (the present total sum of pixel values) is selected. Thus, in FIG. 33, compared to FIG. 32, the waveform slackening of the output pixel value KOS around times t=10, 11 is resolved, and at time t=11, the output pixel value KOS follows the total sum of pixel values KS which is the input pixel values.

In FIG. 33, beyond times t=12, 13, the output pixel value KOS returns to the same state as that of FIG. 32. However, the wiper 360 usually operates to remove the raindrops 103 adhering to the front windscreen 101 and the adhering amount of raindrops is reset, so there is no problem.

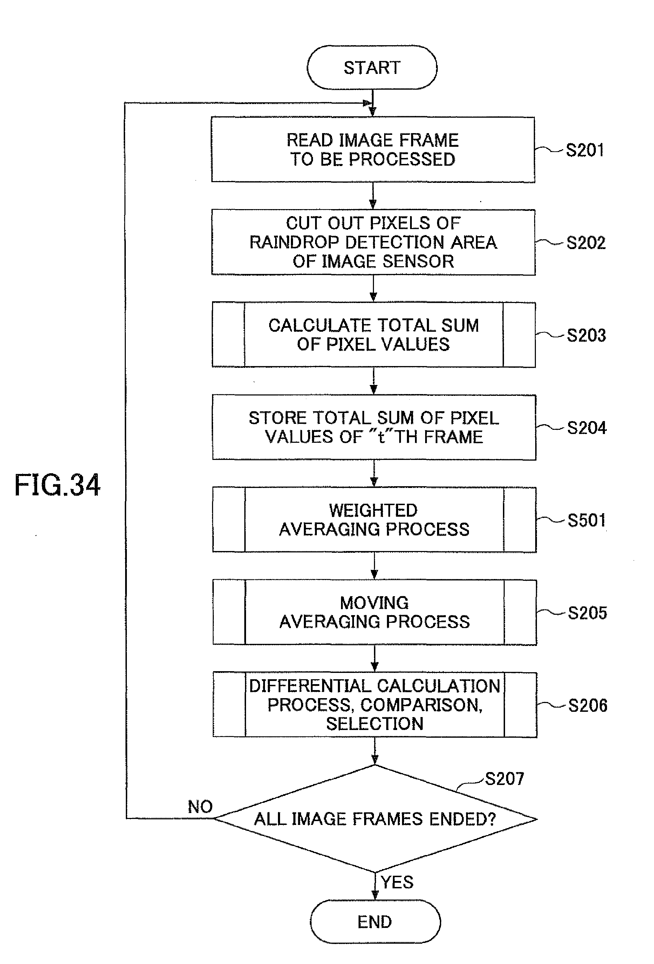

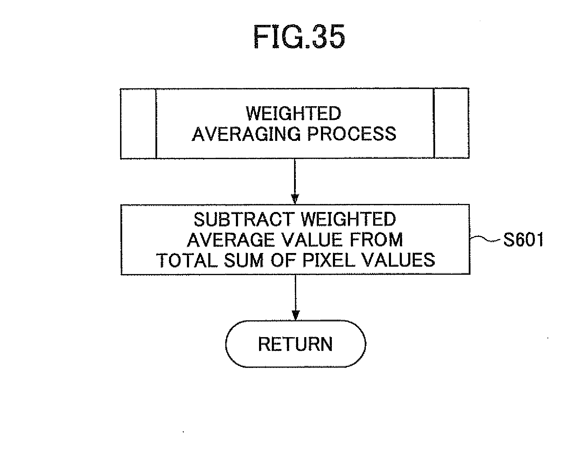

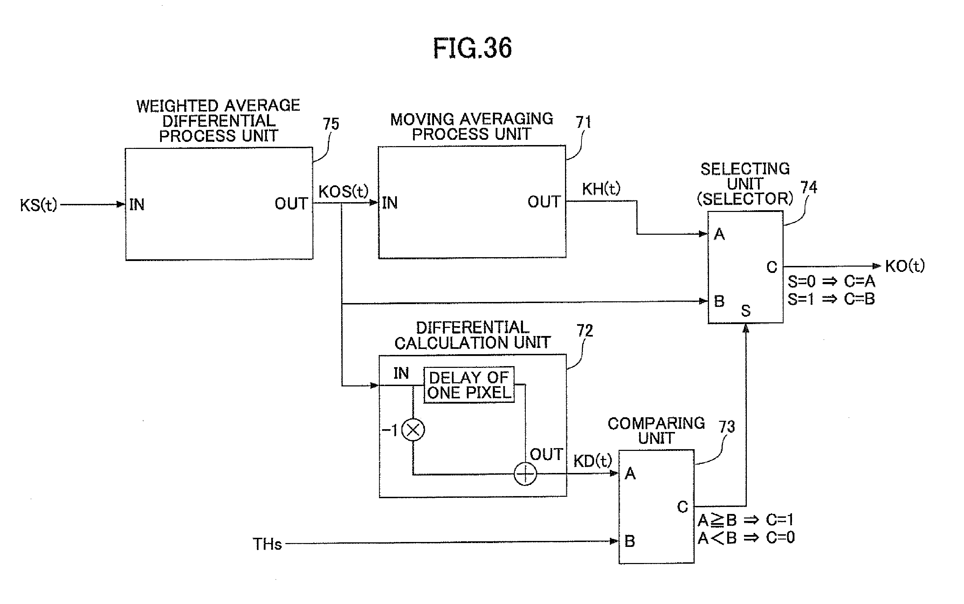

FIGS. 34 and 35 are flowcharts for describing the process of FIG. 33 (a specific process for responding to a rapid change in the raindrop information). Furthermore, FIG. 36 is a block diagram illustrating the process of FIG. 33. In FIG. 34, the same processes as those of FIG. 25 are denoted by the same reference numerals, and are not further described. In FIG. 36, the same processes as those of FIG. 22 are denoted by the same reference numerals, and are not further described.

In the flowchart of FIG. 34, step S501 is added in between step S204 and step S205 of the flowchart of FIG. 25. The detailed process of step S501 of FIG. 34 is indicated in step S601 of FIG. 35. In step S601, a weighted average differential process unit 75 illustrated in FIG. 36 calculates a weighted average value KJ(t) as indicated by FIGS. 28 and 30 and formulas 3 and 4, and further subtracts the weighted average value KJ(t) from the total sum of pixel values KS (t) to calculate an output pixel value KOS(t). The processes before and after step S501 in FIG. 34 are as described with reference to FIGS. 22 and 25.

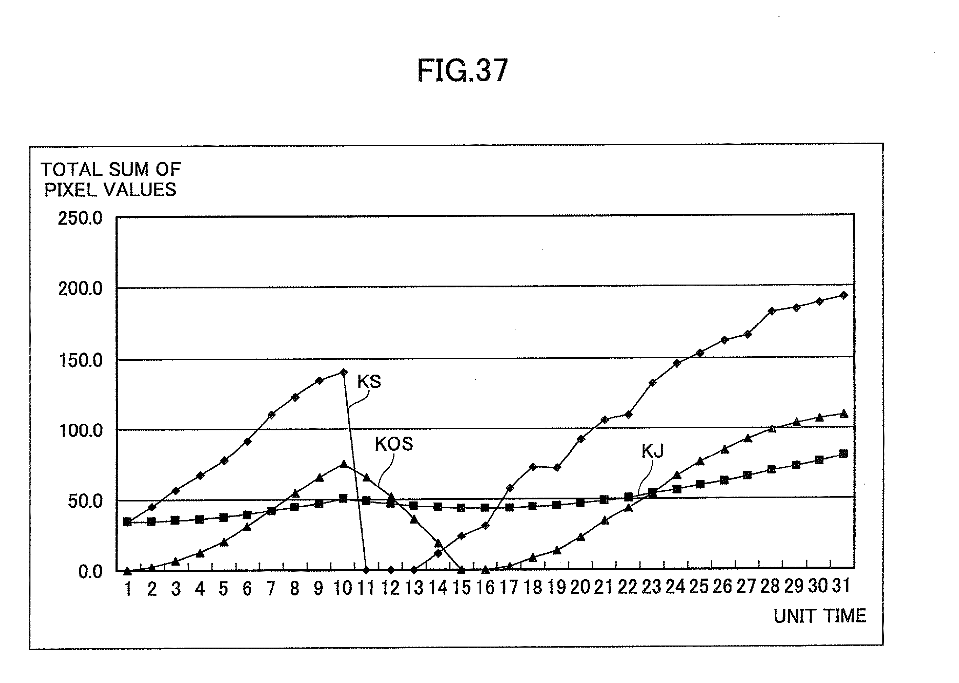

Incidentally, when the raindrops are wiped off by operating the wiper or by wiping the glass window, the raindrop amount decreases rapidly, and in accordance with this decrease, the total sum of pixel values rapidly decreases. FIG. 37 is a graph simulating a case where the amount of raindrops adhering the front windscreen has rapidly decreased, indicating the temporal changes in the output pixel value and the weighted average value in a case where the total sum of pixel values becomes zero.

In FIG. 37, although the total sum of pixel values KS becomes zero at time t=11, the output pixel value KOS and the weighted average value KJ do not immediately become zero. Furthermore, at time t=15, the total sum of pixel values KS is not zero, but the output pixel value KOS becomes zero. This is because reference is made to the total sum of pixel values of the past to calculate the weighted average value and the output pixel value.

In this case, at times t=11 through 13, although the total sum of pixel values KS is zero and there are no raindrops (non-rainfall state), the output of the output pixel value KOS indicates that there are raindrops (rainfall state). At times t=15 through 17, the output pixel value KOS indicates a reverse output. Then, problems may arise such as the wiper operating at unintended times.

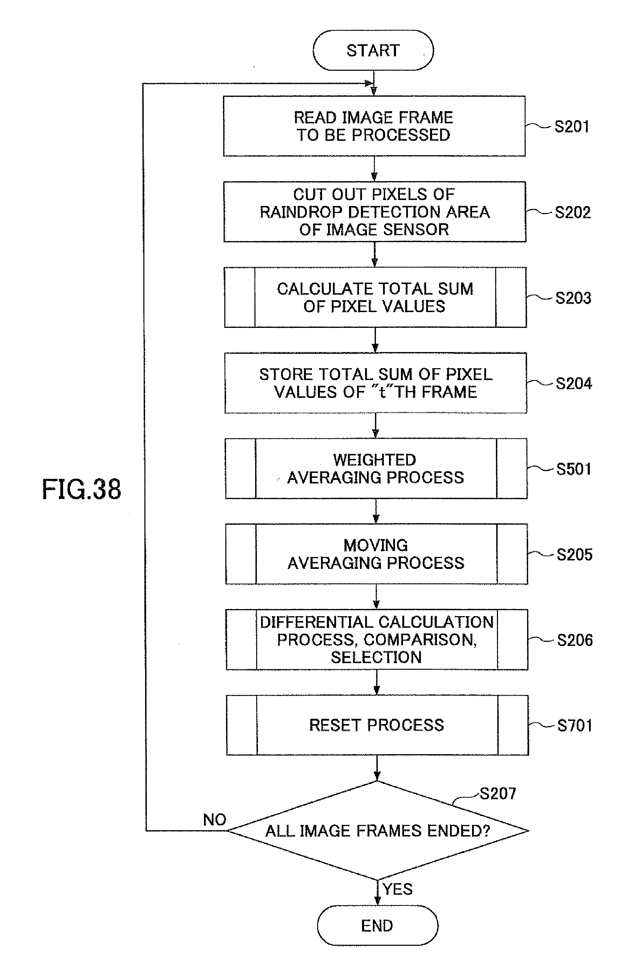

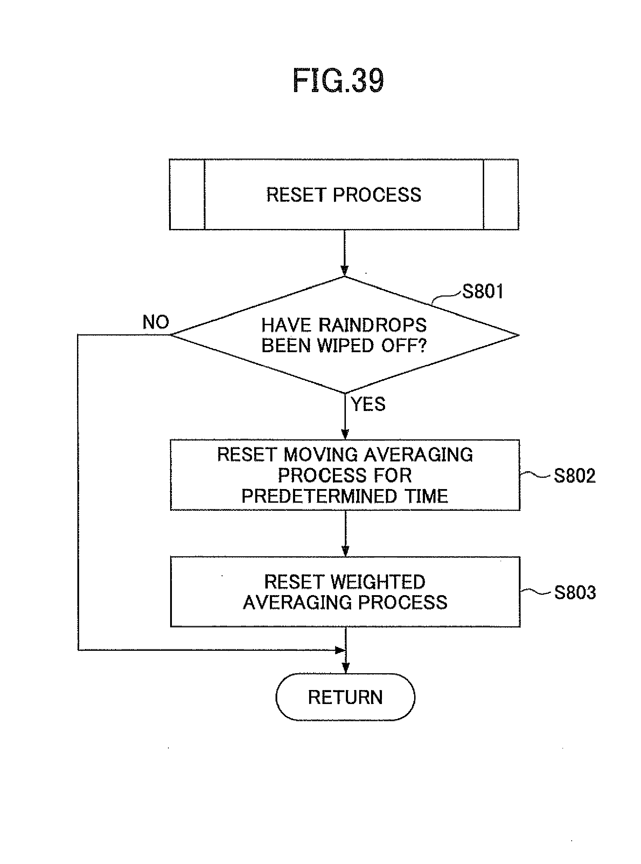

This problem can be solved by resetting the output pixel value KOS when the raindrop amount rapidly decreases. Resetting means, for example, a clamp process of clamping the output pixel value KOS to a predetermined value. FIGS. 38 and 39 are flowcharts for describing a clamp process. In FIG. 38, the same processes as those of FIG. 34 are denoted by the same reference numerals, and are not further described.

In the flowchart of FIG. 38, step S701 is added in between step S206 and step S207 of the flowchart of FIG. 34. The detailed process of step S701 of FIG. 38 is indicated in steps S801 through S803 of FIG. 39. First, in step S801, the raindrop amount information calculating unit 60 determines whether the raindrops have been wiped off. For example, the raindrop amount information calculating unit 60 determines that the raindrops have been wiped off when the CPU 61 illustrated in FIG. 11 sends, to the wiper control unit 320 illustrated in FIG. 1, a signal or an instruction to operate the wiper 360.

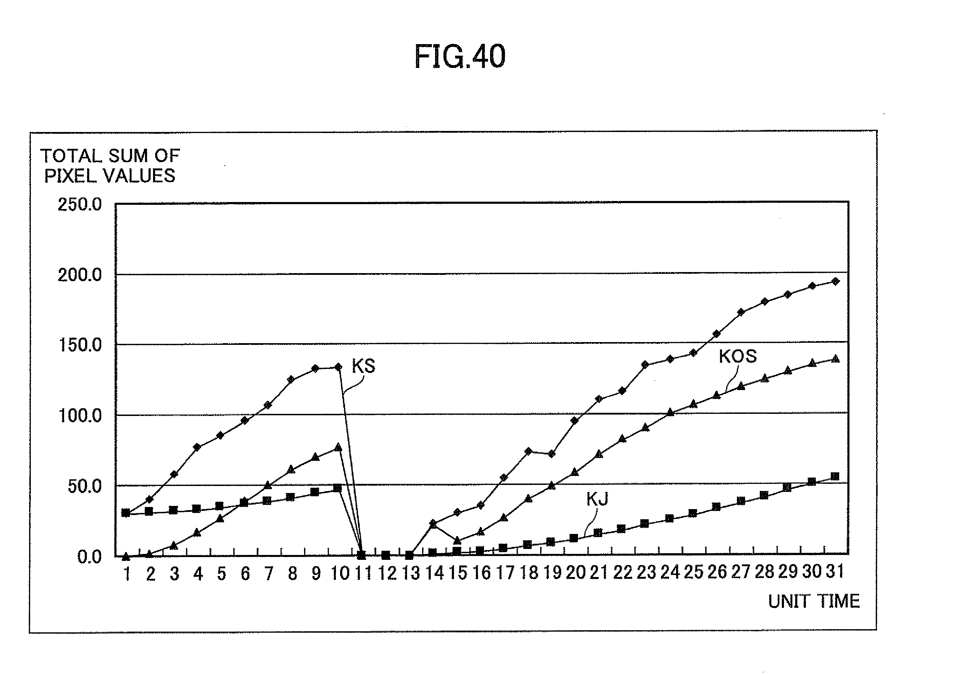

Next, when the raindrop amount information calculating unit 60 determines that the raindrops have been wiped off (YES in step S801), in step S802, the raindrop amount information calculating unit 60 resets the moving averaging process for a predetermined time. For example, the raindrop amount information calculating unit 60 maintains the output of the moving averaging process to zero for a predetermined time. The predetermined time is preferably more than the time of the number of taps (number of multipliers). This is to reset the impact of past times (the impact of times t=9 and 10 of FIG. 40 described below). In the example of FIG. 19, the number of taps is three.

Next, in step S803, the raindrop amount information calculating unit 60 resets the weighted averaging process. For example, the raindrop amount information calculating unit 60 maintains the output of the weighted averaging process at zero. The processes before and after step S701 in FIG. 38 are as described with reference to FIG. 25. When the raindrop amount information calculating unit 60 determines that the raindrops have not been wiped off (NO in step S801), steps S802 and S803 are not executed.

By executing the clamp process illustrated in FIGS. 38 and 39, the graph of FIG. 37 changes as illustrated in FIG. 40. In FIG. 40, the total sum of pixel values KS becomes zero at time t=11, and the output pixel value KOS and weighted average value KJ follows this and become zero. Furthermore, from time t=13, the output pixel value KOS follows the total sum of pixel values KS, and rises. Accordingly, the problem that the wiper operates at unintended times is solved.

The program corresponding to the process by the raindrop amount information calculating unit 60 illustrated in FIG. 34, 35, 38, and 39 may be stored in the ROM 62 of the raindrop amount information calculating unit 60 illustrated in FIG. 11, and may be executed by the CPU 61. Alternatively, the raindrop amount information calculating unit 60 may be provided in the image analyzing unit 50, and the process by the raindrop amount information calculating unit 60 may be executed as a program of the CPU 51 of the image analyzing unit 50, or as the hardware logic 54, or as a combination of these formats.

Alternatively, the above problem may be provided as a file having an installable format or an executable format recorded in a computer-readable recording medium such as a CD-ROM, a flexible disk (FD), a CD-R, and a DVD. Alternatively, the above program may be provided by being stored in a computer connected via a network such as the Internet, and downloaded via the network. Furthermore, the above program may be provided or distributed via a network such as the Internet.

As described above, by introducing a weighted average differential process for the total sum of pixel values, it is possible to perform raindrop detection in which the impact of noise is reduced (S/N is improved). Furthermore, by executing the moving averaging process on the total sum of pixel values (output pixel values) after the weighted average differential process, the noise components that change among the time of the raindrop information can be removed, and raindrop detection can be stably performed.

Furthermore, the total sum of pixel values (output pixel value) after the weighted average differential process on which the moving averaging process has been executed, and the total sum of pixel values (output pixel value) after the weighted average differential process on which the moving averaging process has not been executed are appropriately selected according to the amount of rainfall. Accordingly, raindrop detection can be performed without decreasing the reaction speed even when there is a rapid change (splash) in the raindrop information.

The adhering matter detecting device and the moving body device control system are not limited to the specific embodiments described herein, and variations and modifications may be made without departing from the scope of the present invention.

Furthermore, in the above embodiments, the raindrop information is calculated based on the sum of pixel values in each of the reference areas. However, the raindrop information may be calculated based on the average value of pixel values in each of the reference areas. In this case, the same effects as the above embodiment can be attained.

Furthermore, in the above embodiment, when the sum of pixel values in a reference area exceeds the threshold Th0, it is determined that raindrops have adhered to the front windscreen in that reference area. However, it is needless to say that when the sum of pixel values in a reference area is greater than or equal to the threshold Th0, it may be determined that raindrops have adhered to the front windscreen in that reference area.

According to an aspect of the present invention, there is provided an adhering matter detecting device and a moving body device control system, by which the detection sensitivity is improved.

The adhering matter detecting device and the moving body device control system are not limited to the specific embodiments described herein, and variations and modifications may be made without departing from the scope of the present invention.

**Claims**

1.  An adhering matter detecting device **characterized by**:

    a light radiating unit configured to radiate light onto a predetermined area of an object to which adhering matter adheres;

    an imaging unit configured to receive, by a plurality of pixels, reflected light from the adhering matter of the light radiated from the light radiating unit, convert the received reflected light into image data, and output the image data; and

    an adhering amount information calculating unit configured to process the image data obtained from the imaging unit, and calculate adhering amount information of the adhering matter, wherein

    the adhering amount information calculating unit divides an image area used for detecting the adhering matter into a plurality of reference areas, calculates adhering-matter-by-area information indicating an amount of the adhering matter in each of the plurality of reference areas, compares the adhering-matter-by-area information with a predetermined threshold, and calculates the adhering amount information by adding together the adhering-matter-by-area information using a result of the comparison.

2.  The adhering matter detecting device according to claim 1, **characterized in that**
    the adhering amount information calculating unit includes an averaging process unit configured to  calculate the adhering amount information at each predetermined time, and calculate average adhering amount information by performing an averaging process on the adhering amount information of a predetermined time point and the adhering amount information of a previous time point prior to the predetermined time point.

3.  The adhering matter detecting device according to claim 2, **characterized in that**
    the averaging process performed by the averaging process unit is a moving averaging process or a process using an IIR filter.

4.  The adhering matter detecting device according to claim 2 or 3, **characterized in that**
    the adhering amount information calculating unit includes a selecting unit configured to select and output either one of the adhering amount information of the predetermined time point or the average adhering amount information.

5.  The adhering matter detecting device according to claim 4, **characterized in that**
    the adhering amount information calculating unit includes
    a differential calculating unit configured to calculate a differential signal indicating a degree of variation of the adhering amount information calculated at each predetermined time with respect to time, and
    a comparing unit configured to compare the differential signal calculated by the  differential calculating unit with a second threshold and output a result of the comparison to the selecting unit, wherein
    the selecting unit selects either one of the adhering amount information of the predetermined time point or the average adhering amount information, based on the result of the comparison by the comparing unit.

6.  The adhering matter detecting device according to claim 1, **characterized in that**
    the adhering amount information calculating unit calculates combination adhering matter information by dividing the image area used for detecting the adhering matter into the plurality of reference areas, calculating the adhering-matter-by-area information indicating the amount of the adhering matter in each of the plurality of reference areas at each predetermined time, comparing the adhering-matter-by-area information with the predetermined threshold, and adding together the adhering-matter-by-area information using the result of the comparison, and
    the adhering amount information calculating unit further calculates a weighted average value by performing a weighted averaging process on the combination adhering matter information of a predetermined time point and the combination adhering matter information of a predetermined time range, and sets, as the adhering amount information, a weighted average differential value obtained by subtracting the weighted average value from the combination adhering matter information of the predetermined time  point.

**7.** The adhering matter detecting device according to claim 6, **characterized in that**
the combination adhering matter information of the predetermined time range is the combination adhering matter information of a previous time point prior to the predetermined time point.

**8.** The adhering matter detecting device according to claim 6 or 7, **characterized in that**
the adhering amount information calculating unit resets the weighted averaging process when the adhering matter is removed.

**9.** The adhering matter detecting device according to any one of claims 6 through 8, **characterized in that**
the adhering amount information calculating unit calculates a moving average value by performing a moving averaging process on the weighted average differential value of a predetermined time point and the weighted average differential value of a previous time point prior to the predetermined time point, and sets the moving average value as the adhering amount information.

**10.** The adhering matter detecting device according to claim 9, **characterized in that**
the adhering amount information calculating unit resets the moving averaging process when the adhering matter is removed.

**11.** The adhering matter detecting device according to claim 9 or 10, **characterized in that**
the adhering amount information calculating unit includes a selecting unit configured to select and output either one of the weighted average differential value of the predetermined time point or the moving average value.

**12.** The adhering matter detecting device according to claim 11, **characterized in that**
the adhering amount information calculating unit includes
a differential calculating unit configured to calculate a differential signal indicating a degree of variation of the weighted average differential value calculated at each predetermined time with respect to time, and
a comparing unit configured to compare the differential signal calculated by the differential calculating unit with a second threshold and output a result of the comparison to the selecting unit, wherein
the selecting unit selects either one of the weighted average differential value of the predetermined time point or the moving average value, based on the result of the comparison by the comparing unit.

**13.** The adhering matter detecting device according to any one of claims 1 through 12, **characterized in that**
the adhering amount information calculating unit calculates the adhering amount information based on another reference area covering a boundary of adjacent ones of the plurality of reference areas.

**14.** A moving body device control system **characterized by**:

the adhering matter detecting device according to any one of claims 1 through 13 installed in a moving body, wherein
the moving body device control system controls a predetermined device installed in the moving body based on the adhering amount information detected by the adhering matter detecting device.

**15.** A non-transitory computer-readable recording medium storing a program that causes a computer to execute a process of calculating adhering amount information of adhering matter adhering to an object, the process **characterized by**:

radiating light onto a predetermined area of the object to which the adhering matter adheres;
receiving, by a plurality of pixels, reflected light from the adhering matter of the radiated light, converting the received reflected light into image data, and outputting the image data; and
calculating the adhering amount information of the adhering matter upon processing the obtained image data, wherein
the calculating includes dividing an image area used for detecting the adhering matter into a plurality of reference areas, calculating adhering-matter-by-area information indicating an amount of the adhering matter in each of the plurality of reference areas, comparing the adhering-matter-by-area information with a predetermined threshold, and calculating the adhering amount information by adding together the adhering-matter-by-area information using a result of the comparison.

FIG.1

# FIG.2

101

102

103

104

IMAGE ANALYZING UNIT

60

RAINDROP AMOUNT
INFORMATION
CALCULATING UNIT

30  40

20

50

10

# FIG.3

IMAGE ANALYZING UNIT 50

RAINDROP AMOUNT INFORMATION CALCULATING UNIT 60

40

SIGNAL PROCESSING UNIT 45

44 43 42 41

# FIG.4A

# FIG.4B

# FIG.5

# FIG.6

TRANSMITTANCE (%)

100

0

WAVELENGTH

LIGHT EMITTING WAVELENGTH
OF LIGHT SOURCE 30

# FIG.7

TRANSMITTANCE (%)

100

0

WAVELENGTH

LIGHT EMITTING WAVELENGTH
OF LIGHT SOURCE 30

# FIG.8

EP 2 690 597 A2

FIG.9

# FIG.10

IMAGE
ANALYZING UNIT

101
102
103
104
30  40  60
20    50
10

# FIG.11

EP 2 690 597 A2

FIG.12A

LUMINANCE

S

N

102

FIG.12B

LUMINANCE

S

N/p  N/p  N/p  N/p  N/p  N/p  N/p  N/p

$102_1$  $102_2$  $102_3$  $102_4$ ........................................ $102_p$

FIG.13

SUM OF PIXEL VALUES

Th0 →

$102_1$  $102_2$  $102_3$  $102_4$  $102_5$  $102_6$  $102_7$  $102_8$

EP 2 690 597 A2

EP 2 690 597 A2

FIG.14

30dot

640dot

101

102

FIG.15

$102_1$ $102_2$ $102_3$ $102_4$ $102_5$ $102_6$ $102_7$ $102_8$ 102

30dot

80dot $102_9$ $102_{10}$ $102_{11}$ $102_{12}$ $102_{13}$ $102_{14}$ $102_{15}$

FIG.16

START

CALCULATE SUM OF PIXEL VALUES Pi(i=1~15) OF EACH OF REFERENCE AREAS WHEN LIGHT SOURCE IS TURNED ON ⌐S101

CALCULATE SUM OF PIXEL VALUES Qi(i=1~15) OF EACH OF REFERENCE AREAS WHEN LIGHT SOURCE IS TURNED OFF ⌐S102

CALCULATE RAINDROP INFORMATION
Ai=Pi−Qi(i=1~15) ⌐S103

MULTIPLY RAINDROP INFORMATION Ai
BY GAIN AND SUBTRACT OFFSET ⌐S104

⌐S105

i=1

INCREMENT i

Ai＞Th0?  NO  i=15?  YES

NO

YES

ADD Ai AND CALCULATE
TOTAL SUM OF PIXEL VALUES A

END

EP 2 690 597 A2

## FIG.17A

SUM OF PIXEL VALUES

t=T0

Th0

Kn0

$102_1$ $102_2$ $102_3$ $102_4$ $102_5$ $102_6$ $102_7$ $102_8$

## FIG.17B

SUM OF PIXEL VALUES

t=T1

Th0

$102_1$ $102_2$ $102_3$ $102_4$ $102_5$ $102_6$ $102_7$ $102_8$

## FIG.17C

SUM OF PIXEL VALUES

t=T2

Th0

$102_1$ $102_2$ $102_3$ $102_4$ $102_5$ $102_6$ $102_7$ $102_8$

## FIG.17D

SUM OF PIXEL VALUES

t=T3

Th0

$102_1$ $102_2$ $102_3$ $102_4$ $102_5$ $102_6$ $102_7$ $102_8$

## FIG.17E

SUM OF PIXEL VALUES

t=T4

Th0

$102_1$ $102_2$ $102_3$ $102_4$ $102_5$ $102_6$ $102_7$ $102_8$

TOTAL SUM OF PIXEL VALUES

FIG.18A

Kn0 × 8(AREA)

TIME

TOTAL SUM OF PIXEL VALUES

FIG.18B

T1 T2 T3

TIME

TOTAL SUM OF PIXEL VALUES

FIG.18C

T1 T2 T3 T4

TIME

TOTAL SUM OF PIXEL VALUES

FIG.18D

T1 T2 T3 T4

TIME

# FIG.19

FIG.20A

SUM OF PIXEL VALUES

t=T4

Th0

Kn0

$102_1$  $102_2$  $102_3$  $102_4$  $102_5$  $102_6$  $102_7$  $102_8$

FIG.20B

SUM OF PIXEL VALUES

t=T5

Th0

$102_1$  $102_2$  $102_3$  $102_4$  $102_5$  $102_6$  $102_7$  $102_8$

FIG.20C

SUM OF PIXEL VALUES

t=T6

Th0

$102_1$  $102_2$  $102_3$  $102_4$  $102_5$  $102_6$  $102_7$  $102_8$

EP 2 690 597 A2

## FIG.21A

TOTAL SUM OF PIXEL VALUES

T4 T5 T6     TIME

## FIG.21B

TOTAL SUM OF PIXEL VALUES

T4 T5 T6     TIME

# FIG.22

MOVING AVERAGING
PROCESS UNIT                    71

KS(t) ——→ IN                    OUT —— KH(t)

SELECTING
UNIT
(SELECTOR)    74

A

C ——→ KO(t)

S=0 ⇒ C=A
S=1 ⇒ C=B

B        S

DIFFERENTIAL
CALCULATION UNIT              72

IN    DELAY OF
ONE PIXEL

−1 ⊗

OUT   KD(t)

COMPARING 73
UNIT

A

C

A≧B ⇒ C=1
A<B ⇒ C=0

THs ———————→ B

EP 2 690 597 A2

# FIG.23

DIFFERENTIAL VALUE
OF TOTAL SUM
OF PIXEL VALUES

THs

T4 T5 T6

TIME

# FIG.24

TOTAL SUM OF
PIXEL VALUES

T4 T5 T6

TIME

FIG.25

```
            ┌─────────────┐
            │    START    │
            └──────┬──────┘
                   │
      ┌────────────▼────────────┐
      │    READ IMAGE FRAME     │─── S201
      │     TO BE PROCESSED     │
      └────────────┬────────────┘
                   │
      ┌────────────▼────────────┐
      │   CUT OUT PIXELS OF     │
      │  RAINDROP DETECTION AREA│─── S202
      │     OF IMAGE SENSOR     │
      └────────────┬────────────┘
                   │
      ┌────────────▼────────────┐
      │   CALCULATE TOTAL SUM   │─── S203
      │     OF PIXEL VALUES     │
      └────────────┬────────────┘
                   │
      ┌────────────▼────────────┐
      │  STORE TOTAL SUM OF PIXEL│─── S204
      │   VALUES OF "t"TH FRAME │
      └────────────┬────────────┘
                   │
      ┌────────────▼────────────┐
      │         MOVING          │─── S205
      │    AVERAGING PROCESS    │
      └────────────┬────────────┘
                   │
      ┌────────────▼────────────┐
      │ DIFFERENTIAL CALCULATION│
      │   PROCESS, COMPARISON,  │─── S206
      │        SELECTION        │
      └────────────┬────────────┘
                   │
        NO   ◇─────▼─────◇ ─── S207
      ◄──────  ALL IMAGE FRAMES ENDED?
               ◇───────────◇
                   │YES
            ┌──────▼──────┐
            │     END     │
            └─────────────┘
```

# FIG.26A

```
┌──┬──────────────────────────────┬──┐
│  │         MOVING               │  │
│  │   AVERAGING PROCESS          │  │
└──┴──────────────────────────────┴──┘
                  │
                  ▼
┌──────────────────────────────────┐
│      CALCULATE AVERAGE OF         │
│  TOTAL SUMS OF PIXEL VALUES       │──── S301
│  OF PAST FOUR IMAGE FRAMES        │
└──────────────────────────────────┘
                  │
                  ▼
          ╭──────────────╮
          │   RETURN     │
          ╰──────────────╯
```

# FIG.26B

```
┌──┬──────────────────────────────┬──┐
│  │     DIFFERENTIAL PROCESS      │  │
└──┴──────────────────────────────┴──┘
                  │
                  ▼
┌──────────────────────────────────┐
│      CALCULATE DIFFERENCE         │──── S401
│        BETWEEN INPUTS             │
└──────────────────────────────────┘
                  │
                  ▼
┌──────────────────────────────────┐
│      COMPARE DIFFERENCE           │──── S402
│    WITH SECOND THRESHOLD          │
└──────────────────────────────────┘
                  │
                  ▼
          ╭──────────────╮
          │   RETURN     │
          ╰──────────────╯
```

# FIG.27

TOTAL SUM OF PIXEL VALUES (y-axis); UNIT TIME (x-axis). Graph showing curves labeled KS, N, and S.

# FIG.28

KS(t) ──────────────── DELAY OF ONE PIXEL ──── KS(t-1)

F ⊗          1-F ⊗

⊕ ──────► KJ(t)

# FIG.29

EP 2 690 597 A2

# FIG.30

# FIG.31

TOTAL SUM OF
PIXEL VALUES

EP 2 690 597 A2

**FIG.32**

TOTAL SUM OF PIXEL VALUES

KS

KOS

S

UNIT TIME

# FIG.33

FIG.34

```
                    ┌─────────────┐
                    │    START    │
                    └──────┬──────┘
                           │
         ┌─────────────────▼─────────────────┐
         │        READ IMAGE FRAME           │──── S201
         │        TO BE PROCESSED            │
         └─────────────────┬─────────────────┘
                           │
         ┌─────────────────▼─────────────────┐
         │        CUT OUT PIXELS OF          │
         │   RAINDROP DETECTION AREA         │──── S202
         │        OF IMAGE SENSOR            │
         └─────────────────┬─────────────────┘
                           │
         ┌─────────────────▼─────────────────┐
         │       CALCULATE TOTAL SUM         │──── S203
         │        OF PIXEL VALUES            │
         └─────────────────┬─────────────────┘
                           │
         ┌─────────────────▼─────────────────┐
         │    STORE TOTAL SUM OF PIXEL       │──── S204
         │    VALUES OF "t"TH FRAME          │
         └─────────────────┬─────────────────┘
                           │
         ┌─────────────────▼─────────────────┐
         │          WEIGHTED                 │──── S501
         │     AVERAGING PROCESS             │
         └─────────────────┬─────────────────┘
                           │
         ┌─────────────────▼─────────────────┐
         │           MOVING                  │──── S205
         │     AVERAGING PROCESS             │
         └─────────────────┬─────────────────┘
                           │
         ┌─────────────────▼─────────────────┐
         │   DIFFERENTIAL CALCULATION        │──── S206
         │   PROCESS, COMPARISON,            │
         │        SELECTION                  │
         └─────────────────┬─────────────────┘
                           │
                    ◇──────▼──────◇
              NO   ╱               ╲  S207
         ┌───────╱  ALL IMAGE FRAMES ╲
         │       ╲      ENDED?        ╱
         │        ╲                  ╱
         │         ◇────────┬───────◇
         │                  │ YES
         │           ┌──────▼──────┐
         │           │     END     │
         │           └─────────────┘
```

# FIG.35

```
┌─────────────────────────────────┐
│  │        WEIGHTED           │  │
│  │   AVERAGING PROCESS       │  │
└─────────────────────────────────┘
              │
              ▼
┌─────────────────────────────────┐
│      SUBTRACT WEIGHTED          │
│     AVERAGE VALUE FROM          │ ~S601
│  TOTAL SUM OF PIXEL VALUES      │
└─────────────────────────────────┘
              │
              ▼
        (   RETURN   )
```

# FIG.36

WEIGHTED AVERAGE
DIFFERENTIAL
PROCESS UNIT          75

MOVING AVERAGING
PROCESS UNIT          71

SELECTING
UNIT
(SELECTOR)            74

KS(t) →  IN          OUT  KOS(t)  IN          OUT  KH(t)

A

C  → KO(t)

S=0 ⇒ C=A
S=1 ⇒ C=B

B    S

DIFFERENTIAL
CALCULATION UNIT      72

IN  DELAY OF
ONE PIXEL

COMPARING
UNIT                  73

−1 ⊗

OUT  KD(t)  A

⊕

C

A≧B ⇒ C=1
A＜B ⇒ C=0

THs                              B

EP 2 690 597 A2

# FIG.37

TOTAL SUM OF
PIXEL VALUES

EP 2 690 597 A2

**FIG.38**

START

READ IMAGE FRAME
TO BE PROCESSED ⟶ S201

CUT OUT PIXELS OF
RAINDROP DETECTION AREA
OF IMAGE SENSOR ⟶ S202

CALCULATE TOTAL SUM
OF PIXEL VALUES ⟶ S203

STORE TOTAL SUM OF PIXEL
VALUES OF "t"TH FRAME ⟶ S204

WEIGHTED
AVERAGING PROCESS ⟶ S501

MOVING
AVERAGING PROCESS ⟶ S205

DIFFERENTIAL CALCULATION
PROCESS, COMPARISON,
SELECTION ⟶ S206

RESET PROCESS ⟶ S701

S207

NO ⟵ ALL IMAGE FRAMES ENDED?

YES

END

EP 2 690 597 A2

# FIG.39

RESET PROCESS

↓

HAVE RAINDROPS BEEN WIPED OFF? — S801

NO →

↓ YES

RESET MOVING AVERAGING PROCESS FOR PREDETERMINED TIME — S802

↓

RESET WEIGHTED AVERAGING PROCESS — S803

↓

RETURN

FIG.40

**REFERENCES CITED IN THE DESCRIPTION**

**Patent documents cited in the description**

- JP H10148618 B

- JP H10261064 B